# EUROPÄISCHE PATENTSCHRIFT

(11) **EP 2 411 437 B1**
(45) Veröffentlichungstag und Bekanntmachung des Hinweises auf die Patenterteilung: **08.05.2013**
(21) Anmeldenummer: 10715097.1
(22) Anmeldetag: 25.03.2010
(51) Int. Cl.: C08G 18/66, C08L 75/04

(54) **ZUSAMMENSETZUNG UMFASSEND STABILE POLYOLMISCHUNGEN**
COMPOSITION COMPRISING STABLE POLYOL MIXTURES
COMPOSITION COMPRENANT DES MÉLANGES DE POLYOLS STABLES

(30) Priorität: 25.03.2009 DE 102009014226; 27.05.2009 DE 102009022854
(43) Veröffentlichungstag der Anmeldung: 01.02.2012
(73) Patentinhaber: BYK-Chemie GmbH, 46483 Wesel (DE)
(72) Erfinder: NAGELSDIEK, René, 46499 Hamminkeln (DE); GÖBELT, Bernd, D-46487 Wesel (DE); GREEFRATH, Dorothée, D-45481 Mülheim an der Ruhr (DE); BIECKER, Christian, D-46485 Wesel (DE); OMEIS, Jürgen, D-46286 Dorsten-Lembeck (DE)
(74) Vertreter: Kutzenberger, Helga
(86) Internationale Anmeldenummer: PCT/EP2010/001859
(87) Internationale Veröffentlichungsnummer: WO 2010/108672

(56) Entgegenhaltungen:
- EP-A1- 0 543 250
- EP-A1- 1 416 019
- US-A- 4 673 696
- US-A1- 2003 105 201

## Beschreibung

Die vorliegende Erfindung betrifft einphasige, flüssige Zusammensetzungen umfassend wenigstens zwei an sich miteinander unverträgliche, isocyanatreaktive Polyolkomponenten und als Vermittleradditiv wenigstens ein, die Verträglichkeit zwischen den an sich miteinander unverträglichen Polyolkomponenten bewirkendes Copolymerisat, das aus bestimmten, nachfolgend aufgeführten Struktureinheiten aufgebaut ist, von denen ein Teil mindestens eine protonierbare Stickstoffgruppe aufweist und ggf. zumindest teilweise mit mindestens einer, wenigstens eine saure Gruppe aufweisenden, organischen Verbindung versalzen und/oder ggfs. zumindest teilweise mit einer organischen Alkylierungsverbindung quaterniert sind, sowie deren Verwendung zur Herstellung von Polyurethanen.

Polyurethane gehören zu den Werkstoffen, die in unterschiedlichster Form vielfältige Anwendung finden. Dazu können sie in Form von Hart- oder Weichschäumen oder kompakt in Beschichtungen, Adhäsionsmitteln, Dichtungsmassen oder Elastomeren (sog. CASE-Anwendungen) eingesetzt werden. Um das für die jeweilige Anwendung erforderliche, bestmögliche Eigenschaftsprofil des zum Einsatz kommenden Polyurethans zu erreichen, ist eine sorgfältige Auswahl der Ausgangskomponenten erforderlich.

Polyurethane werden durch Umsetzung von Polyolen mit Polyisocyanaten hergestellt. Während die Auswahl der im großtechnischen Maßstab zur Verfügung stehenden Polyisocyanate beschränkt ist, stehen bei den Polyolen eine Vielzahl möglicher Komponenten zur Verfügung, die eingesetzt werden können. Diese reicht von Polyetherpolyolen über Polyesterpolyole bis zu niedermolekularen Polyolen, welche zum Beispiel als Kettenverlängerer oder Kettenvernetzer zum Einsatz kommen.

Üblicherweise wird bei der Herstellung eines Polyurethans nicht nur ein bestimmtes Polyol mit Polyisocyanaten umgesetzt, sondern eine Mischung verschiedener Polyole, die nieder- oder höhermolekular sein können. In vielen Fällen ist eine Mischung der zum Einsatz kommenden Polyole nicht stabil, sondern neigt zumindest mit der Zeit zu einer Phasentrennung. Diese Entmischung ist durch die Unverträglichkeit der zum Einsatz kommenden Polyole bedingt. Die Unverträglichkeit kann verschiedene Ursachen haben, wie beispielsweise unterschiedliche Molekulargewichte, unterschiedliche Monomerzusammensetzung, unterschiedliche Polarität und/oder unterschiedlicher struktureller Aufbau (z.B. statistischer bzw. blockartiger Aufbau) der Polyole. Unabhängig von ihrer Ursache führt die Unverträglichkeit zu mannigfachen Problemen bei der Handhabung und Verarbeitung von solchen Polyolmischungen. Zum einen ist eine Lagerung oder ein Transport solcher Polyolmischung sogar für kurze Zeiträume wegen der Separationsneigung zwischen den Polyolen in vielen Fällen nicht möglich. Daher muss vor der Verarbeitung solcher Polyolmischungen durch eine neuerliche Durchmischung für eine homogene Verteilung der Polyolkomponenten gesorgt werden. Dafür sind beim Polyurethanhersteller Investitionen in Mischanlagen notwendig, die außerdem zu einem erhöhten Energieaufwand führen. Hinzu kommt noch, dass im Falle einer unzureichenden Durchmischung der Polyolkomponenten das Risiko besteht, dass das daraus hergestellte Polyurethan nicht das gewünschte Eigenschaftsprofil aufweist. Es hat daher nicht an Versuchen gefehlt, dieses Entmischungsproblem der Polyolkomponenten zumindest zu verbessern.

Als eine Möglichkeit, der Entmischung von unverträglichen Polyolkomponenten entgegenzuwirken, wurde im Stande der Technik, wie z. B. in US 4312973, darin gesehen, die Struktur der unverträglichen Polyolkomponenten so zu verändern, dass sie miteinander ausreichend stabil vermischt bleiben. Da aber mit der Veränderung der Polyolkomponenten letztendlich auch die Gefahr einer Veränderung des Eigenschaftsprofils der daraus hergestellten Polyurethane einhergeht, ist diese Lösung des Entmischungsproblems in vielen Fällen nicht anwendbar. Darüberhinaus sind die Polyurethanhersteller in den meisten Fällen keine Hersteller der zum Einsatz kommenden Polyolkomponenten, so dass sie gezwungen sind, mit den am Markt verfügbaren Polyolkomponenten das angestrebte Polyurethan-Eigenschaftsprofil zu erreichen.

Ein weiterer Versuch, das Entmischungsproblem bei unverträglichen Polyolkomponenten zu lösen, besteht gemäß dem Stande der Technik darin, eine zwischen den unverträglichen Polyolkomponenten verträglichkeitsvermittelnde Komponente mitzuverwenden, wodurch die Separationsneigung zwischen den unverträglichen Polyolkomponenten zumindest verlangsamt wird.

So wird in US 4125505 beschrieben, dass Polyalkylenoxide mit einem bestimmten Aufbau als eine der Polyolkomponenten mit einem an sich unverträglichen Kettenverlängerer, wie einem niedermolekularen Polyol, mit Hilfe in Teilchenform vorliegenden Polymerisaten aus ungesättigten Monomeren wie z. B. Styrol/Acrylnitril Copolymeren, in ihrer Verträglichkeit verbessert werden können. Nachteilig für den Polyurethan-Hersteller ist dabei, dass die dispergierten Polymerteilchen bei nicht unmittelbarer Verwendung sedimentieren oder auf die mechanischen Eigenschaften des daraus hergestellten Polyurethans einen nicht gewollten Einfluss nehmen können.

In US 5344584 wird vorgeschlagen, einer Mischung von zwei isocyanatreaktiven Verbindungen, die normalerweise nicht miteinander mischbar sind, eine oberflächenaktive Verbindung zuzugeben, die als Carbonsäureester oder Carbonsäureamid saure Gruppen aufweist. Vorzugsweise leitet sich der Polycarbonsäureester von einer Hydroxycarbonsäure bzw. von einem ringgeöffneten Lacton ab. Die Zugabe der oberflächenaktiven Verbindung zu den an sich miteinander unverträglichen Polyolkomponenten wirkt zwar verträglichkeitsverbessemd, aber nicht immer in dem gewünschten Ausmaß. Außerdem sind diese Polycarbonsäureester aufgrund ihrer möglichen Reaktivität auch nicht in allen Systemen einsetzbar.

Einschränkungen sind auch bei der in US 4673696 offengelegten Verwendung von ungesättigten Esterolen als Verträglichkeitsvermittler zwischen kurzkettigen und langkettigen, isocyanatreaktiven Polyolkomponenten, die an sich miteinander unverträglich sind, zu erwarten. Dies resultiert insbesondere daraus, dass diese Mischungen nur für die Herstellung bestimmter Polyurethane eingesetzt werden können, bei denen die Mitverwendung der ethylenisch ungesättigten Esterole keine unerwünschten Nebenreaktionen erwarten lässt. Auch mit diesen Verträglichkeitsvermittlern ist eine Verträglichkeitsverbesserung nicht immer in dem gewünschten Ausmaß erzielbar.

Aufgabe der vorliegenden Erfindung war es daher, die Nachteile des Standes der Technik zu beheben und die Entmischungsneigung von an sich unverträglichen, isocyanatreaktiven Polyolkomponenten unterschiedlichsten Aufbaus, Polarität und/oder Molekulargewicht möglichst vollständig bis zu deren weiteren reaktiven Umsetzung zu Polyurethanen zu unterbinden.

Als eine an sich unverträgliche Mischung wird erfindungsgemäß eine Mischung von mindestens zwei an sich unverträglichen Polyolen angesehen, die bei einer Lagerung bei einer Temperatur von 40°C innerhalb eines Zeitraums von einer Woche nach ihrer Mischung mit üblichen Mischgeräten bis zur Einphasigkeit wieder eine (durch Augenschein wahrnehmbare) sichtbare Zweiphasenbildung aufweist.

Diese Aufgabe wird durch das zur Verfügungstellen der erfindungsgemäßen, eine lagerstabile Einphasigkeit aufweisende, flüssigen Zusammensetzung umfassend
(1) eine isocyanatreaktive Polyol-Komponente
(2) wenigstens eine weitere mit der Polyol-Komponente (1) an sich unverträgliche, isocyanatreaktive Polyol-Komponente und
(3) als Vermittleradditiv wenigstens ein, die Einphasigkeit zwischen den PolyolKomponenten (1) und (2) bewirkendes Copolymerisat
wobei das Copolymerisat die folgenden Struktureinheiten I bis VI umfassen kann und aus wenigstens einer der Struktureinheiten I bis III und aus wenigstens einer der Struktureinheiten IV bis VI aufgebaut ist: 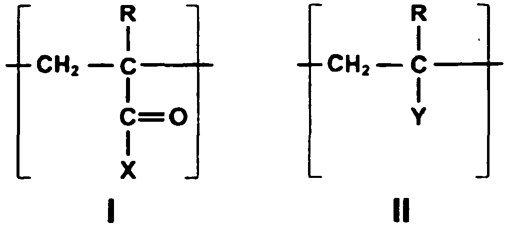 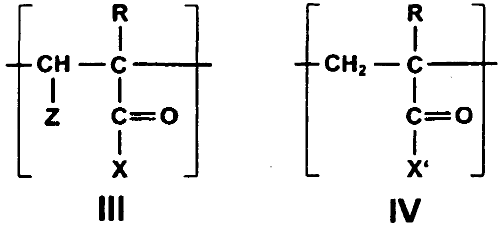 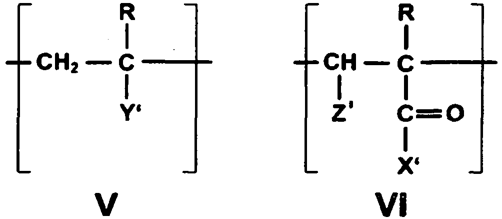 worin
R für Wasserstoff oder einen Alkylrest steht, X für eine -OR₁ Gruppe oder eine 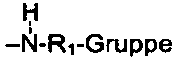 steht, worin
R₁ für Wasserstoff, einen Alkylrest, einen Alkenylrest, einen eine funktionelle Gruppe aufweisenden Alkylenrest, einen Cycloalkylrest, einen aromatischen Rest, wobei jeder dieser Reste ggfs. auch substituiert sein kann, einen Polyether-Rest oder Polyester-Rest oder einen Polyether/Polyester-Rest steht;
Y für einen ggfs. substituierten, aromatischen ggfs. wenigstens ein Hetereoatom als Ringglied aufweisenden, nicht basischen Rest mit 4-12 C-Atomen, einen
Lactam-Rest mit 4-8 C-Atomen, einen
über eine -O- bzw. 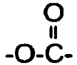 Brücke verbundenen Polyether- bzw. Polyester-Rest oder eine 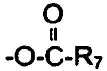 Gruppe, worin
R₇ für einen ggfs. substituierten Alkylrest oder einen ggfs. substituierten Cycloalkylrest steht;
Z für eine -COOR₁ Gruppe steht, worin R₁ die vorstehend angegebene Bedeutung hat, oder
Z zusammen mit der Gruppe 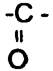 X mit X in der Bedeutung einer -OR₁ Gruppe und R₁ für Wasserstoff eine cyclische Anhydridgruppe oder mit X in der Bedeutung einer Gruppe 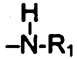 eine cyclische Imidgruppe bildet, deren Stickstoff mit einem Rest R₁ mit der vorstehend angegebenen Bedeutung substituiert ist,
X' für eine 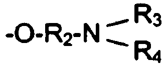 Gruppe oder eine entsprechende, quarternierte 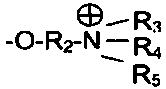 *S^{⊝}Gruppe,
für eine 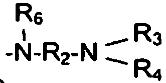 Gruppe oder eine entsprechende, quarternierte 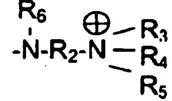 * S^{⊝}Gruppe,
worin R₂ für einen aliphatischen Rest, vorzugsweise einen Alkylenrest, oder einen aromatischen Rest, vorzugsweise Arylenrest, steht, R₃,R₄ und R₅, gleich oder verschieden, für einen Alkylrest, einen Arylrest oder Arylalkylenrest stehen, und die Reste R₃ - R₅ ggfs. mit einer funktionellen Gruppe, vorzugsweise einer Hydroxylgruppe, substituiert sein können,
R₆ für Wasserstoff steht oder, gleich oder verschieden, die Bedeutung einer der Reste R₃ bis R₅ hat;
S^{⊝} für den verbleibenden, anionischen Rest einer der nachstehend aufgeführten Alkylierungs-Verbindungen (4'), vorzugsweise für ein Halogenid-Anion, besonders bevorzugt Chlorid, Bromid oder lodid, für ein Sulfat-Anion oder Carboxylat-Anion steht,
oder
X' für eine 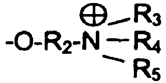 * A^{⊝} Gruppe oder eine 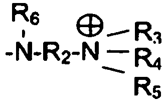 * A^{⊝} Gruppe steht, worin
R₂ die vorstehend angegebene Bedeutung hat,
R₃, R₄, R₅ und R₆ die vorstehend angegebene Bedeutung haben, wobei aber wenigstens einer der Reste R₃ - R₅ für Wasserstoff steht, und
A^{⊝} für den verbleibenden, anionischen Rest einer der nachstehend aufgeführten, zur Versalzung eingesetzten Verbindungen (4) steht,
oder
X' in Bedeutung einer 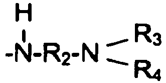 Gruppe zusammen mit Z' als eine -COOR₁ Gruppe eine cyclische imidgruppe bildet, deren Stickstoff mit der 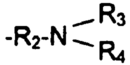 Gruppe oder mit einer entsprechenden, quarternierten Gruppe 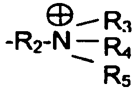 *S^{⊝}
oder mit einer entsprechenden, versalzten 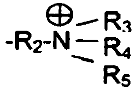 A^{⊝} Gruppe
substituiert ist, worin die Reste R₃, R₄, R₅, A^{⊝} und S^{⊝} die vorstehend angegebene Bedeutung haben;
Y' für ein N-haltiges, heterocyclisches, basisches Radikal, vorzugsweise ein aromatisches, wenigstens ein N-Atom und ggfs. weitere Heteroatome als Ringglieder enthaltendes Radikal oder für ein gesättigtes oder ungesättigtes cycloaliphatisches, wenigstens ein N-Atom und ggfs. weitere Heteroatome als Ringglieder enthaltenes Radikal,
Z', gleich oder verschieden von X', für eine Gruppierung mit der Bedeutung von X' oder für eine -COOR₁ Gruppe steht, worin R₁ die vorstehend angegebene Bedeutung hat,
worin die Struktureinheiten IV bis VI ggfs. zumindest teilweise als mit mindestens einer vorzugsweise oligomeren, wenigstens eine saure Gruppe aufweisenden, organischen Verbindung (4) versalzen und/oder ggfs. zumindest teilweise als mit einer organischen Alkylierungsverbindung (4') quatemiert vorliegen.

Unter einer eine lagerstabile Einphasigkeit aufweisenden Mischung wird erfindungsgemäß eine an sich unverträgliche Mischung von zwei an sich unverträglichen Polyolen angesehen, die nach Zugabe eines Vermittleradditivs (3) und Mischung mit üblichen Mischgeräten bis zur Einphasigkeit bei einer anschließenden Lagerung bei einer Temperatur von 40°C innerhalb einer Woche keine (durch Augenschein wahrnehmbare) sichtbare Zweiphasenbildung aufweisen.

Dabei wird vorzugsweise das Vermittleradditiv (3) in solchen Mengen der an sich unverträglichen Mischung von zwei an sich unverträglichen Polyolen hinzugefügt, dass bei der Mischung mit üblichen Mischgeräten die Einphasigkeit der Mischung erzielt wird. Besonders bevorzugt wird die zugegebene Menge des Vermittleradditivs so ausgewählt, dass die Einphasigkeit der so erhaltenen Mischung wenigstens die vorstehend angegebene Lagerung über eine Woche gewährleistet. Ganz besonders bevorzugt wird die zugegebene Menge des Vermittleradditivs so ausgewählt, dass die Einphasigkeit der so erhaltenen Mischung bis zu deren reaktiver Umsetzung zu einem Polyurethan gewährleistet ist.

Die als Vermittleradditive zum Einsatz kommenden Copolymerisate zeichnen sich insbesondere dadurch aus, dass in den Struktureinheiten I bis VI
R für Wasserstoff oder einen Methyl- oder Ethyl-Rest steht,
X für eine -NH-R₁ Gruppe oder eine -OR₁ Gruppe steht, worin R₁ für Wasserstoff, einen Alkylrest mit 1 bis 6 C-Atomen, einen Alkylenrest mit 1 bis 6 C-Atomen und einer OH-Gruppe, vorzugsweise als Endgruppe, oder einen Polyalkylenoxid-Rest steht,
Y für einen ggfs. substituierten Phenyl-, Naphtyl-, Pyrrolidon-Rest, einen ε-Caprolactam Rest, einen über eine -O- Brücke verbundenen Polyalkylenoxid- oder einen Acetat-Rest steht,
Z für eine -COOR₁-Gruppe steht, worin R₁ die vorstehend angegebene Bedeutung hat oder
Z zusammen mit der Gruppe 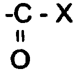 mit X in der Bedeutung einer -OR₁ Gruppe und R₁ für Wasserstoff eine cyclische Anhydridgruppierung
oder mit X in der Bedeutung einer Gruppe 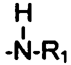 eine cyclische Imidgruppierung bildet, deren Stickstoff mit einem Rest R₁ mit der vorstehend angegebenen Bedeutung substituiert ist,
X' für eine 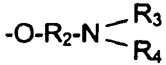 Gruppe oder eine entsprechende, quatemierte 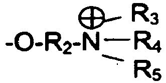 * S^{⊝} Gruppe,
für eine 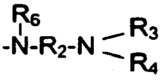 Gruppe oder eine
entsprechende, quatemierte 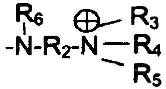 * S^{⊝} Gruppe steht,
worin R₂ für einen Alkylenrest mit 1 bis 6 C-Atomen,
R₃, R₄, R₅ oder R₆, gleich oder verschieden, für einen Alkylrest mit 1 - 3 C-Atomen oder einen Benzylrest steht, wobei die Reste R₃ - R₅ ggfs. jeweils durch eine -OH Gruppe substituiert sein können,
S^{⊝} für den verbleibenden, anionischen Rest der nachstehend aufgeführten Alkylierungs-Verbindung (4'), vorzugsweise für ein Halogenid-Anion, besonders bevorzugt Chlorid, Bromid oder lodid, für eine Sulfat-Anion- oder Carboxylat-Anion steht,
oder X' für eine 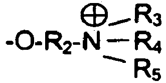 * A^{⊝} Gruppe oder eine entsprechende,
versalzte 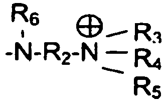 * A^{⊝} Gruppe steht, worin
R2 die vorstehend angegebene Bedeutung hat,
R³, R⁴, R₅ und R₆ die vorstehend angegebene Bedeutung haben, wobei ober wenigstens einer der Reste R₃ - R₅ für Wasserstoff steht, und
A^{⊝} für den verbleibenden, anionischen Rest einer der nachstehend aufgeführten, zur Versalzung eingesetzten Verbindungen (4) steht,
oder X' in der Bedeutung einer 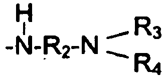 Gruppe zusammen mit Z' als eine -COOR₁ Gruppe eine cyclische Imidgruppe bildet, deren Stickstoff mit der Gruppe 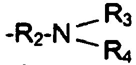 oder einer der vorstehend angegebenen, versalzten oder quartemierten, entsprechenden Gruppe substituiert ist,
Y' für einen aliphatischen oder aromatischen, heterocyclischen, basischen Rest mit 5 -10 Ringgliedern und wenigstens einem Stickstoffatom als Ringglied steht, vorzugsweise für einen Imidazol-, Pyrrol-, Pyrazol-, Pyrimidin-, Purin-, Chinolin- oder Pyridin-Rest steht;
Z', gleich oder verschieden von X', für eine Gruppierung mit der vorstehenden Bedeutung für X' oder für eine -COOR₁ Gruppe, worin R₁ die vorstehend angegebene Bedeutung hat, steht,
worin die Struktureinheiten IV bis VI ggfs. als mit mindestens einer vorzugsweise oligomeren, wenigstens eine Säuregruppe aufweisende organische Verbindung (4) vorzugsweise bis zu 75% versalzen und/oder ggfs. als mit wenigstens einer Alkylierungsverbindung (4') quarterniert vorliegen.

Das als Vermittleradditiv (3) zum Einsatz kommende Copolymerisat kann einen statistischen, gradientenartigen oder blockartigen Aufbau der copolymerisierten Struktureinheiten aufweisen, der ggf. Kammstrukturen umfasst.

In einer bevorzugten Ausführungsform handelt es sich bei dem Vermittleradditiv (3) um ein strukturiertes Copolymerisat.

Strukturierte Copolymere sind lineare Blockcopolymere, Gradientencopolymere, verzweigte/sternförmige Blockcopolymere und Kammcopolymere.

Gradientenartige Copolymerisate der erfindungsgemäß zum Einsatz kommenden Copolymerisate sind Copolymerisate, bei denen entlang der Polymerketten die Konzentration der Struktureinheiten eines bestimmten ethylenisch ungesättigten Monomers oder der Struktureinheiten einer Mischung von ethylenisch ungesättigten Monomeren kontinuierlich abnimmt und die Konzentration der Struktureinheiten eines davon unterschiedlichen ethylenisch gesättigten Monomeren oder der Struktureinheiten einer Mischung von davon unterschiedlichen ethylenisch ungesättigten Monomeren zunimmt.

Beispielhaft für gradientenartige Copolymerisate wird auf Offenbarung in EP 1 416 019 und WO 01/44389 verwiesen.

Als Blockcopolymerisate, die erfindungsgemäß zum Einsatz kommen, werden Copolymerisate verstanden, die durch Zugabe mindestens zweier unterschiedlicher ethylenisch ungesättigten Monomere, zweier unterschiedlicher Mischungen ethylenisch ungesättigter Monomere oder durch Zugabe eines ethylenisch ungesättigten Monomers und einer Mischung ethylenisch ungesättigter Monomere zu unterschiedlichen Zeitpunkten bei der Durchführung einer kontrollierten Polymerisation erhalten werden, wobei ein ethylenisch ungesättigtes Monomere oder eine Mischung von ethylenisch ungesättigten Monomeren zu Beginn der Reaktion vorgelegt wird. Bei der Zugabe des weiteren ethylenisch ungesättigten Monomeren oder der Mischung ethylenisch ungesättigter Monomere oder der Zugabe ethylenisch ungesättigter Monomere in mehreren Raten, können die zu Beginn der Polymerisation zugegebenen ethylenisch ungesättigten Monomere bereits komplett abreagiert sein, oder noch teilweise nicht polymerisiert sein. Durch eine solche Polymerisation weisen Blockcopolymere mindestens einen sprunghaften Übergang in ihren Struktureinheiten entlang der Polymerkette auf, der die Grenze zwischen den einzelnen Blöcken darstellt.

Solche Blockcopolymerstrukturen, die vorzugsweise zum Einsatz kommen können, sind beispielsweise AB-Diblockcopolymere, ABA- oder ABC-Triblockcopolymere. Beispiele für die Herstellung solcher Blockcopolymerstrukturen finden sich in US 6,849,679, US 4,656,226, US 4,755,563, US 5,085,698, US 5,160,372, US 5,219,945, US 5,221,334, US 5,272,201, US 5,519,085, US 5,859,113, US 6,306,994, US 6,316,564, US 6,413,306, WO 01/44389 und WO 03/046029.

Blockcopolymerisate, die vorzugsweise erfindungsgemäß zum Einsatz kommen, enthalten Blöcke mit einer Mindestanzahl von 3 Struktureinheiten pro Block. Vorzugsweise beträgt die Mindestanzahl an Struktureinheiten pro Block 3, besonders bevorzugt 5 und ganz besonders bevorzugt 10.

Dabei können in jedem der Blöcke dieselben Struktureinheiten, aber jeweils in unterschiedlicher Zahl vorliegen, oder jeder der Blöcke ist aus unterschiedlichen Struktureinheiten aufgebaut.

In einer bevorzugten Ausführungsform weist das Vermittleradditiv (3) eine Blockstruktur vom Typ A-B, A-B-A, B-A-B, A-B-C und /oder A-C-B auf, in der die A, B und C Blöcke eine unterschiedliche Zusammensetzung der Struktureinheiten repräsentieren, wobei sich
die Blöcke A, B und C durch ihre jeweilige Zusammensetzung der Struktureinheiten I - VI unterscheiden und in denen sich die Menge der Struktureinheiten IV-VI in zwei benachbarten Blöcken um jeweils mehr als 5 Gew.% voneinander unterscheidet.

Besonders bevorzugt sind Blockstrukturen, in denen
der Block A von 0 bis 25 Gew.% wenigstens einer der Struktureinheiten IV-VI, ggfs. zumindest teilweise versalzt oder quatemiert enthält,
der Block B von 50 Gew.% bis 100 Gew.% wenigstens einer der Struktureinheiten IV-VI, ggfs. zumindest teilweise versalzt oder quaterniert enthält,
und der Block C von 0 bis 75 Gew.% wenigstens einer der Struktureinheiten IV-VI, ggfs. zumindest teilweise versalzt oder quaterniert enthält,
wobei sich die Gew.%-Angaben der Struktureinheiten IV-VI auf deren basische, d.h. nicht-versalzte bzw. nicht-quartemierte Form beziehen.

Eine ganz besonders bevorzugten Ausführungsform ist dadurch gekennzeichnet, dass
der Block A von 0 bis 10 Gew.% wenigstens einer der Struktureinheiten IV-VI ggfs. zumindest teilweise versalzt oder quaterniert enthält,
der Block B von 75 Gew.% bis 100 Gew.% wenigstens einer der Struktureinheiten IV-VI ggfs. zumindest teilweise versalzt oder quatemiert enthält,
und der Block C von 0 bis 50 Gew.% wenigstens einer der Struktureinheiten IV-VI ggfs. zumindest teilweise versalzt oder quarterniert enthält,
wobei sich die Gew.%-Angaben der Struktureinheiten IV-VI auf deren basische, d.h. nicht-versalzte bzw. nicht-quartemierte Form beziehen.

Gemäß einer bevorzugten Gesamtzusammensetzung des als Vermittleradditiv eingesetzten Copolymerisats beträgt der Anteil der Struktureinheiten IV-VI im nicht-versalzten bzw. nicht-quarternierten Zustand, bezogen auf das Gesamtgewicht des Copolymerisats, von 5 bis 95 Gew.%, besonders bevorzugt von 15 bis 60 Gew.% und ganz besonders bevorzugt von 20 bis 45 Gew.%.

Vorzugsweise besitzen die erfindungsgemäßen Polymere ein zahlenmittleres Molekulargewicht Mₙ von 1000 bis 250000 g/mol, besonders bevorzugt 2000 bis 25000 g/mol und ganz besonders bevorzugt 2500 bis 10000 g/mol.

Die Bestimmung der Molekulargewichte erfolgt mit Hilfe der Gelpermeationschromatographie (GPC) und ist in den Beispielen näher erläutert.

Die erfindungsgemäß zum Einsatz kommenden Copolymerisate zeichnen sich durch wenigstens eine der Struktureinheiten IV bis VI aus, die eine protonierbare Stickstoffgruppe durch Polymerisation eines entsprechenden ethylenisch ungesättigten Monomeren aufweist bzw. bei denen eine solche protonierbare Stickstoffgruppe durch kettenanaloge Umsetzung in das Molekül eingebaut wurde.

Unter einer protonierbaren Stickstoffgruppe wird erfindungsgemäß eine Gruppe verstanden, in der ein Stickstoffatom in Gegenwart eines Protons zu einem Kation reagieren kann, wobei diese Reaktion ggf. auch reversibel verläuft. Schematisch sei dies anhand folgender Strukturen beispielhaft verdeutlicht.

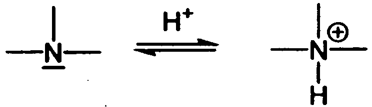

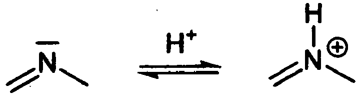

Beispiele für Verbindungen, die protonierbare Stickstoffgruppen aufweisen, sind z.B. primäre, sekundäre und tertiäre Aminogruppen aufweisende Verbindungen sowie Verbindungen mit aliphatischen oder aromatischen heterocyclischen Resten, die wenigstens ein Stickstoffatom und ggfs. weitere Hetereoatome als Ringglieder enthalten, wie N-haltige aliphatische oder aromatische, heterocyclische Reste, die sich z. B. von Pyrrol, Imidazol, Pyrazol, Pyridin, Pyrimidin, Pyridazin, Pyrazin, Dihydropyrrol, ,Pyrrolin, Pyrrolidin, Thiazol, Isothiazol, Oxazol, Isoxazol, Dihydrooxazol, Oxazolan, Oxazolin, Azepin, Piperazin, Morpholin, Thiazin, Indol, Benzimidazol, Chinolin, Phenazin, Triazol oder Triazin ableiten.

Besonders bevorzugt sind einfach ethylenisch ungesättigte, aliphatische Verbindungen mit primären, sekundären und/oder tertiären Aminogruppen, deren Aminogruppen mit aliphatischen und/oder aromatischen Radikalen, vorzugsweise mit C1 - C6 Alkylradikalen und/oder C6 - C10 Arylradikalen substituiert sein können, sowie weitere stickstoffhaltigen, vorzugsweise aromatischen Heterocyclen mit 5-6 Ringgliedern, die sich besonders bevorzugt von Imidazol oder Pyridin, ableiten.

Die Struktureinheiten IV - VI der erfindungsgemäß zum Einsatz kommenden Copolymerisate können sich vorzugsweise von ethylenisch ungesättigten, vorzugsweise aliphatischen Monomeren, die Aminogruppen aufweisen, und/oder Vinylgruppen aufweisenden, vorzugsweise aromatischen Hetereocyclen mit wenigstens einem protonierbaren N-Atom als Ringglied, ableiten. Besonders bevorzugt können wenigstens eine Aminogruppe aufweisende (Meth)acrylsäureDerivate wie (Meth)acrylate oder (Meth)acrylamide, ganz besonders bevorzugt wenigstens eine Aminogruppe aufweisende C1-C6 Alkyl(meth)acrylate wie beispielsweise N,N-Dimethylaminoethyl(meth)acrylat und N,N-Dimethylaminopropyl(meth)acrylat, Aminogruppen aufweisende (C1-C6)alkyl(meth)acrylamide, wie beispielsweise N,N-Dimethylaminopropyl-(meth)acrylamid, oder basische Vinylheterocyclen wie beispielsweise 4-Vinylpyridin, 2-Vinylpyridin oder Vinylimidazol, eingesetzt werden.

Die Aminogruppenhaltige Struktureinheiten der erfindungsgemäß zum Einsatz kommenden Copolymerisate können auch durch Modifikation von Struktureinheiten nach deren Herstellung z. B. durch Polymerisation von oxiranhaltigen, ethylenisch ungesättigten Monomeren wie z. B. Glycidylmethacrylat, und anschließender Umsetzung mit entsprechenden, reaktiven Aminen erhalten werden.

Alternativ können auch durch Veresterung oder Amidierung bzw. Umesterung oder Umamidierung von Struktureinheiten von Copolymerisaten, die sich von (Meth)acrylsäure, deren Estern und Amiden, oder von Maleinsäure, deren Anhydrid oder Estern ableiten, mit geeigneten Aminoalkoholen oder polyaminofunktionellen Verbindungen entsprechende protonierbare Stickstoff-Gruppen in die jeweiligen Copolymerisate eingebaut werden. Beispiele für diese Umsetzung sind z.B. die Amidierung von Struktureinheiten abgeleitet von (Meth)acrylsäure oder die Amidierung von Struktureinheiten abgeleitet von (Meth)acrylaten mit Aminen wie 3-Dimethylaminopropylamin, 3-Aminopropylimidazol oder aminosubstituierten Pyridinen.

Tertiäre Amine können auch mit Sauerstoff, Peroxoverbindungen wie z.B. Percabonsäuren und mit Wasserstoffperoxid, in Aminoxide überführt werden, die zusätzlich mit Säuren wie zum Beispiel Salzsäure versalzt werden können.

Das durch Polymerisation der ethylenisch-ungesättigten Monomeren erhaltene Copolymerisat mit protonierbaren Stickstoffatomen, kann nach einer dem Fachmann bekannten Methode zumindest partiell versalzt und/oder quaternisiert werden.

Zur Versalzung können die Struktureinheiten mit protonierbaren Stickstoffgruppen mit sauren Gruppen aufweisenden, organischen Verbindungen (4) wie nachstehend aufgeführt, umgesetzt werden.

Als geeignete Verbindungen (4) zur Versalzung der Struktureinheiten IV-VI kann wenigstens eine salzbildende Komponente ausgewählt aus der Gruppe bestehend aus ggfs. substituierten mono-, bi- oder tri-cyclischen Sulfon-, Carbon-, Phosphon- oder Phosphorsäuren und aliphatischen, ggfs. substituierten Sulfon-, Carbon-, Phosphön- oder Phosphorsäuren bzw. wenigstens eine quarternierende Verbindung (4') ausgewählt aus der Gruppe bestehend aus aktiven Alkylhalogeniden oder Alkylestem von der Sschwefelsäure oder ein System aus einer Epoxidverbindung und einer Carbonsäure eingesetzt werden.

Eine bevorzugte Gruppe von substituierten mono-, bi- oder tricyclischen Sulfon-, Carbon- und Phosphonsäuren wird durch die nachfolgende Formel wiedergegeben: 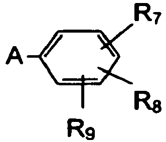 worin
A für eine Carboxy-, Sulfon- oder P(=O)(OH)₂ Gruppe steht und
R₇, R₈ oder R₉, unabhängig voneinander, für Wasserstoff oder einen Substituenten, ausgewählt aus der Gruppe, bestehend aus funktionellen Gruppen oder derivatisierten funktionellen Gruppen ausgewählt aus der Gruppe, bestehend aus Hydroxy, Oxo, Thio, -NO₂, Carboxy, Sulfon, Carbarnoyl, Sulfo, Sulfamoyl, Ammonium, Amidino, Cyan, Formamid und Halogen, steht, oder
R₇, R₈ oder R₉, unabhängig voneinander, für eine gesättigte oder ungesättigte aliphatische, cycloaliphatische oder heterocycloaliphatische Gruppen, carbocyclische oder heterocyclische Arylgruppen, kondensierte carbocyclische, heterocyclische oder carbocyclisch-heterocyclische Gruppen steht, die zusätzlich mit einer der funktionellen Gruppen oder derivatisierten funktionellen Gruppen, die vorstehend erwähnt wurden, substituiert sein können.

Spezielle salzbildende Komponenten, die ausgewählt sind aus der Gruppe, bestehend aus mono-oder bicyclischen Sulfonsäuren, werden nachstehend angegeben:
3-Nitro-benzolsulfonsäure, 4-Sulfophthalsäure, 4-Chlorbenzolsulfonsäure, 4-Hydroxy-3-nitrobenzolsulfonsäure, 4-Dodecylbenzolsulfonäure, 2,5-Dihydroxybenzolsulfonsäure, Sulfanilinsäure, Benzol-1,3-disulfonsäure, 3-Sulfobenzoesäure, 4-Acetylsulfonsäure, 4-Succinimidobenzolsulfonsäure, 4-Phthalimidobenzolsulfonsäure.

Weitere geeignete Sulfonsäuren als salzbildende Komponenten sind

(+)-Campher-10-sulfonsäure und Isomere, Naphthalin-2-sulfonsäure, Naphthalintrisulfonsäure, Isomergernisch, beispielsweise Naphthalin-1,3,6-trisulfonsäure, Naphthalin-1-sulfonsäure und Isomere, Naphthalin-1,5-disulfonsäure und Isomere, 8-Hydroxychinolinsulfonsäure.

Geeignet als salzbildende Komponenten sind auch die nachstehenden mono- oder bicyclischen Carbonsäuren und Phosphorsäuren:
Phthalsäure, Trimellitsäureanhydrid, Isophthalsäure, 5-Nitro-isophthalsäure, 4-Nitrobenzoesäure und Isomere, Benzoesäure-4-sulfamid, 3,5-Dinitrobenzoesäure und Isomere, 1-Naphtylessigsäure, 2-Chlorbenzoesäre und Isomere, 3-Hydroxynaphtoesäure, 2,4-Dichlorbenzoesäure und isomere, N-(4-Carboxyphenyl)phthalimid, 4-Phenylbenzoesäure, 1-Naphthoesäure, Phthaloylglycin, 3,4,5-Trimethoxybenzoesäure, 2,4-Dichlorphenoxyessigsäure, 3-Phthalimidopropionsäure, 2-Phthalimidopropionsäure, 4-Methyl-2-phtyalimidovaleriansäure, 2-Phthalimidoisolvaleriansäure, 2-Phthalimidobuttersäure, Phthalimidobemsteinsäure, 2-Phthalimidoglutarsäure, 2-Phthalimidobenzoesäure, 2,4,6-Trichlorphenoxyessigsäure, 2-(2,4-Dichlorphenoxy)-propionsäure, 4-(2,4-Dichlorphenoxy)-buttersäure, 3-(2,4-Dichlorbenzoyl)propionsäure, 3-(2,4-Dichlorbenzoyl)-buttersäure, 2,4-Dichlorphenylacrylsäure, 3-(4,5-Dichlorphthalimido)-benzoesäure, 2-Tetrachlorphthalimidobenzoesäure, 3-Tetrachlorphthalimidobenzoesäure.

Diese aufgeführten organischen Verbindungen mit wenigstens einer Carbonsäure-, Sulfonsäure-, Phosphonsäure- und/oder Phosphorsäuren-Gruppe können vorzugsweise auch als Esterverbindungen eingesetzt werden. Diese Esterverbindungen können oligomer oder polymer sein und mindestens noch eine carbonsaure, sulfonsaure, phosphonsaure und/oder phosphorsaure Gruppierung aufweisen.

Entsprechende Verbindungen sind
Phosphorsäureester der Formel: (HO)₃₋ₙPO(OR₁₀)ₙ mit n = 1 oder 2, oder
Phosphonsäureester der Formel R₁₃PO(OH)(OR₁₀),
Sulfonsäuren der allgemeinen Formel HOSO₂R₁₁,
saure Schwefelsäureester der Formel HOSO₃R₁₁,
wobei R₁₀ und R₁₁, gleich oder verschieden, für einen Alkyl-, Aryl- oder Aralkylrest mit mindestens 5 C-Atomen und/oder einem Rest eines alkoxylierten Alkohols mit einem zahlenmittleren Molekulargewicht bis 5000 g/mol und/oder einen Rest mit mindestens einer Carbonsäureestergruppe mit einem zahlenmittleren Molekulargewicht bis 5000 g/mol oder einen Polyetherpolyester-Rest, vorzugsweise mit einem zahlengemittelten Molekulargewicht bis 5000 g/mol darstellt, oder eine Mischung solcher Verbindungen; R₁₃, gleich oder verschieden, die Bedeutung von R₁₀ hat oder für Wasserstoff steht.

In einer bevorzugten Ausführung werden zur Versalzung carbonsaure, sulfonsaure, phosphonsaure und/oder phosphorsaure, polymere Ester eingesetzt, die sich vorzugsweise von Polyalkylenoxiden ableiten. Besonders bevorzugt sind carbonsaure und/oder phosphorsaure, polymere Ester erhalten durch Umsetzung von Polyalkylenoxiden abgeleitet von Alkylenoxiden mit 1-4 C-Atomen, vorzugsweise von Ethylenoxid und/oder Propylenoxid, und die bevorzugt zwischen 3 - 15 wiederkehrende Einheiten des Alkylenoxids aufweisen.

Ganz besonders bevorzugt werden carbonsaure und phosphorsaure, polymere Polyalkylenoxide, vorzugsweise von Ethylenoxid und/oder Propylenoxid zur Versalzung eingesetzt, die zusätzlich mindestens über eine Etherbindung mit einem C₁-C₂₄-Alkohol oder zusätzlich über eine Esterbindung mit einem Fettsäurerest verbunden sind. Die sauren Gruppen dieser sauren polymeren Ester liegen hierbei besonders bevorzugt in Form von sauren Di- und Tricarbonsäurepartialester, beispielsweise saure Dicarbonsäurehalbester wie beispielsweise der Bernsteinsäure, Maleinsäure oder Phthalsäure oder in Form der Mono- bzw. Diester der Trimellithsäure vor. Entsprechende carbonsaure polymere Ester sind durch Umsetzung von Alkyl, Aryl-, Aralkyl- oder Alkylaryl-Alkoxylaten wie z.B. Nonylphenolethoxylaten, Isononylalkoholethoxylaten, Isotridecylalkoholethoxylaten oder Butanol- bzw. Methanol-gestarteten Alkylenoxidpolyethern mit Di- und Tricarbonsäuren bzw. deren Derivaten (z.B. Anhydrid, Halogenid) zugänglich.

Alternativ können Phosphorylierungsprodukte dieser Alkoxylate als phosphorsaure, polymere Ester genutzt werden.

Als Alternative oder in Ergänzung zur Versalzung mit den zuvor beschriebenen Säurekomponenten können die protonierbaren Stickstoffgruppen der erfindungsgemäßen Copolymerisate mit Hilfe einer Alkylierungsreaktion mit z.B. aktiven, ggfs. substituierten Alkylhalogeniden, wie z. B. Methyliodid, Methyl- oder Benzylchlorid, mit Dialkylsulfaten wie z. B. C₁-C₆ Dialkylsulfaten oder mit einer Oxiranverbindung in Gegenwart einer Carbonsäure auch quarterniert werden.

Die erfindungsgemäß zum Einsatz kommenden Copolymerisate können sowohl versalzte als auch quarternierte Struktureinheiten in einem Copolymerisat aufweisen. Es ist aber auch möglich, eine Mischung aus einem zumindest teilweise versalzten Copolymerisat mit einem zumindest teilweise quarternierten Copolymerisat als Vermittleradditiv einzusetzen.

Durch Einsatz von bereits versalzten bzw. quaternierten (entweder durch Protonierung oder durch Alkylierung) aminogruppenhaltigen, ethylenisch ungesättigten Monomeren können die Struktureinheiten IV-VI in ihrer versalzten und/oder quaternisierten Form auch durch direkte Polymerisation der versalzten und/oder quaternisierten Monomere erhalten werden.

Beispiele für solche Monomere, die direkt zur Polymerisation eingesetzt werden können, sind z. B. 2-Trimethylammoniumethyl-(meth)acrylatchlorid, 3-Trimethylammoniumpropyl(meth)acrylamidchlorid und 2-Benzyldimethyl-ammoniumethyl(meth)acrylatchlorid.

Zur Herstellung der erfindungsgemäß zum Einsatz kommenden Copolymerisate, insbesondere der Struktureinheiten I-III, können vorzugsweise folgende ethylenisch ungesättigte Monomere verwendet werden: Alkyl(meth)acrylate von geradkettigen, verzweigten oder cycloaliphatischen Alkoholen mit 1 bis 22 Kohlenstoffatomen, wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Tridecyl(meth)acrylat. Cyclohexyl(meth)acrylat, Isobomyl(meth)acrylat, Allyl(meth)acrylat und t-Butyl(meth)acrylat; Aryl(meth)acrylate, wie z. B. Benzyl(meth)acrylat oder Phenyl(meth)acrylat, wobei die Arylreste jeweils unsubstituiert oder bis zu vierfach substituiert sein können, wie zum Beispiel 4-Nitrophenylmethacrylat; Hydroxyalkyl(meth)acrylate von geradkettigen, verzweigten oder cycloaliphatischen Diolen mit 2 bis 36 Kohlenstoffatomen, wie zum Beispiel 3-Hydroxypropylmethacrylat, 3,4-Dihydroxybutylmonomethacrylat, 2-Hydroxyethyl(meth)acrylat, 4-Hydroxybutyl(meth)acrylat, 2-Hydroxypropylmethacrylat, 2,5-Dimethyl-1,6-hexandiolmonomethacrylat, Hydroxyphenoxypropylmethacrylat; Mono(meth)acrylate von oligomeren oder polymeren Ethern, wie z. B. Polyethylenglykolen, Polypropylenglycolen oder gemischten Polyethylen/propylenglycolen, Poly(ethylenglycol)methylether(meth)acrylat, Poly(propylenglycol)methylether(meth)-acrylat mit 5 bis 80 Kohlenstoffatomen, Methoxyethoxyethyl(meth)acrylat, 1-Butoxypropyl(meth)acrylat, Cyclohexyloxymethyl(meth)acrylat, Methoxymethoxyethyl(meth)acrylat, Benzyloxymethyl(meth)acrylat, Furfuryl(meth)acrylat, 2-Butoxyethyl(meth)acrylat, 2-Ethoxyethyl(meth)acrylat, Allyloxymethyl(meth)acrylat, 1-Ethoxybutyl(meth)acrylat, 1-Ethoxyethyl(meth)acrylat, Ethoxymethyl(meth)acrylat, Caprolacton- und/oder Valerolacton-modifizierte Hydroxyalkyl(meth)acrylate mit einem zahlenmittleren Molekulargewicht Mₙ von 220 bis 1200, wobei die Hydroxy(meth)acrylate bevorzugt von geradkettigen, verzweigten oder cycloaliphatischen Diolen mit 2 bis 8 Kohlenstoffatomen abgeleitet sind; (Meth)acrylate von halogenierten Alkoholen, wie zum Beispiel Perfluoralkyl(meth)acrylate mit 6 bis 20 Kohlenstoffatomen, oxiranhaltige (Meth)acrylate, wie zum Beispiel 2,3-Epoxybutylmethacrylat, 3,4-Epoxybutylmethacrylat und Glycidyl(meth)acrylat; Styrol und substituierte Styrole, wie zum Beispiel α-Methylstyrol oder 4-Methylstyrol; Methacrylnitril und Acrylnitril; Vinylgruppen aufweisende, nichtbasische Heterocyclen, wie zum Beispiel 1-[2-(Methacrylyloxy)-ethyl]-2-imidazolidin und N-Vinylpyrrolidon, N-Vinylcaprolactam; Vinylester von Carbonsäuren mit 1 bis 20 Kohlenstoffatomen, wie zum Beispiel Vinylacetat; Maleinsäure, deren Anhydrid, Monoester und Diester; Maleinimid, N-Phenylmaleinimid und N-substituierte Maleinimide mit geradkettigen, verzweigten oder cycloaliphatischen Alkylgruppen mit 1 bis 22 Kohlenstoffatomen, wie zum Beispiel N-Ethylmaleinimid und N-Octylmaleinimid; (Meth)acrylamid; N-Alkyl- und N,N-Dialkylsubstituierte Acrylamide mit geradkettigen, verzweigten oder cycloaliphatischen Alkylgruppen mit 1 bis 22 Kohlenstoffatomen, wie zum Beispiel N-(t-Butyl)acrylamid und N,N-Dimethylacrylamid; silylgruppenhaltige (Meth)acrylate, wie zum Beispiel (Meth)acrylsäure(trimethylsilylester) und Methacrylsäure-[3-(trimethylsilyl)-propylester].

Nach erfolgter Polymerisation können die Struktureinheiten, die sich von diesen ethylenisch ungesättigten Monomeren ableiten, noch weiter modifiziert werden. So lassen sich zum Beispiel Oxiranstrukturen mit nucleophilen Verbindungen, wie 4-Nitrobenzoesäure, umsetzen. Hydroxygruppen können mit Lactonen, wie zum Beispiel ε-Caprolacton, zu Polyestern umgesetzt werden und aus Estergruppen können durch säure- oder basenkatalysierte Esterspaltung OH-Gruppen freigesetzt werden.

Vorzugsweise ist das Vermittleradditiv (3) ein strukturiertes Copolymerisat, besonders bevorzugt ein Block-, Gradienten- oder Kammcopolymer, das vorzugsweise durch ein kontrolliertes radikalisches oder ionisches Polymerisationsverfahren hergestellt worden ist.

Besonders bevorzugt werden solche Vermittleradditive (3) durch kontrollierte radikalische Polymerisation oder Gruppentransferpolymerisation hergestellt.

Je nachdem welche der nachstehend aufgeführten Polymerisationstechniken eingesetzt wird, werden selbst bei Einsatz identischer ethylenisch ungesättigter Monomere und selbst bei denselben Molverhältnissen unterschiedliche Copolymerisate erhalten, da die unterschiedlichen Polymerisationstechniken zu unterschiedlichen Mikrostrukturen beziehungsweise zu unterschiedlichen Abfolgen der Struktureinheiten I- VI führen können. So werden beispielsweise bei der Herstellung von Blockcopolymerisaten nach unterschiedlichen Techniken bei Einsatz identischer Monomerenmischungen unterschiedlich mikrostrukturierte Blöcke erhalten. Darüberhinaus können sich die Copolymerisate auch noch hinsichtlich ihres Molekulargewichts und ihrer Molekulargewichtsverteilung deutlich unterscheiden. Gleiches gilt auch für gradientenartige Copolymerisate.

Für das Durchführen einer kontrollierten Polymerisation sind in der Literatur verschiedene Polymerisationsverfahren bekannt. Eine Übersicht über einige Verfahren ist in Prog. Polym. Sci. 32 (2007) 93-146 zu finden.

Als Polymerisationstechniken zur Herstellung der in den erfindungsgemäßen Zusammensetzungen als Vermittleradditiv zum Einsatz kommenden Copolymerisate sind alle aus dem Stand der Technik bekannten Polymerisationstechniken zur Polymerisation ethylenisch-ungesättigter Monomere anwendbar.

Beispielhaft sind nachfolgend einige Technologien zur Durchführung kontrollierter Polymerisationen genannt.

Die "Atom Transfer Radical Polymerization" (ATRP) ermöglicht eine kontrollierte Polymerisation und ist beispielsweise in Chem. Rev. 2001, 101, 2921 und in Chem. Rev. 2007, 107, 2270-2299 beschrieben.

Zu den kontrollierten Polymerisationsverfahren gehört auch der "Reversible Addition Fragmentation Chain Transfer Process" (RAFT), der bei Verwendung bestimmter Polymerisationsregler auch "MADIX" (macromolecular design via the interchange of xanthates) und "Addition Fragmentation Chain Transfer" genannt wird. RAFT ist beispielsweise in Polym. Int. 2000, 49, 993, Aust. J. Chem 2005, 58, 379, J. Polym. Sci. Part A: Polym. Chem. 2005, 43, 5347, Chem. Lett. 1993, 22, 1089, J. Polym. Sci., Part A 1989, 27, 1741 sowie 1991, 29, 1053 sowie 1993, 31, 1551 sowie 1994, 32, 2745 sowie 1996, 34, 95 sowie 2003, 41, 645 sowie 2004, 42, 597 sowie 2004, 42, 6021 und auch in Macromol. Rapid Commun. 2003, 24, 197, in Polymer 2005, 46, 8458-8468 sowie Polymer 2008, 49, 1079-1131 und in US 6 291 620, WO 98/01478, WO 98/58974 und WO 99/31144 beschrieben.

Ein weiteres Verfahren zur kontrollierten Polymerisation bedient sich Nitroxylverbindungen als Polymerisationsreglern (NMP) und wird beispielsweise in Chem. Rev. 2001, 101, 3661 offenbart.

Ein weiteres kontrolliertes Polymerisationsverfahren ist auch die "Group Transfer Polymerization" (GTP) wie sie beispielsweise von O. W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff., sowie in O.W. Webster, Adv. Polym. Sci. 2004, 167, 1-34 offenbart ist.

Die kontrollierte radikalische Polymerisation mit Tetraphenylethan, wie sie beispielsweise in Macromol. Symp. 1996, 111, 63 beschrieben ist, ist ein weiteres Beispiel für kontrollierte Polymerisationen.

Die kontrollierte radikalische Polymerisation mit 1,1-Diphenylethen als Polymerisationsregler ist beispielsweise in Macromolecular Rapid Communications, 2001, 22, 700 beschrieben.

Die kontrollierte radikalische Polymerisation mit Inifertern ist beispielsweise in Makromol. Chem. Rapid. Commun. 1982, 3, 127 offenbart.

Die kontrollierte radikalische Polymerisation mit Organokobaltkomplexen, ist beispielsweise aus J. Am. Chem. Soc. 1994, 116, 7973, aus Journal of Polymer Science: Part A: Polymer Chemistry, Vol. 38, 1753-1766 (2000), aus Chem. Rev. 2001, 101, 3611-3659 sowie aus Macromolecules 2006, 39, 8219-8222 bekannt.

Als weitere kontrollierte Polymerisationstechnik ist der Degenerative Chain Transfer mit lod-Verbindungen wie zum Beispiel in Macromolecules 2008, 41, 6261, in Chem. Rev. 2006, 106, 3936-3962 oder in US 7 034 085 beschrieben, anzusehen.

Die kontrollierte radikalische Polymerisation in Gegenwart von Thioketonen wird beispielsweise in Chem. Commun., 2006, 835-837 und in Macromol. Rapid Commun. 2007, 28, 746-753 beschrieben.

Insbesondere sind zur Herstellung der bevorzugt strukturierten Copolymerisate alle aus dem Stand der Technik bekannten lebenden kontrollierten Polymerisationstechniken wie beispielsweise ATRP, RAFT, MADIX, NMP, GTP, die kontrollierte radikalische Polymerisation mit Tetraphenylethan, die kontrollierte radikalische Polymerisation mit 1,1-Diphenylethen, die kontrollierte radikalische Polymerisation mit Inifertem, die kontrollierte radikalische Polymerisation in Gegenwart von Thioketonen und die kontrollierte radikalische Polymerisation mit Organokobaltkomplexen einsetzbar.

Die im jeweiligen Polymerisationsverfahren verwendeten Initiatoren sind dem Durchschnittsfachmann bekannt. Für radikalische Polymerisationsprozesse können beispielsweise sowohl Azoinitiatoren wie Azodiisobutyronitril, Peroxidverbindungen, wie Dibenzoylperoxid und Dicumylperoxid, als auch Persulfate wie Ammonium-, Natrium- und Kaliumperoxodisulfat eingesetzt werden.

Auch die für die lebenden, kontrollierten Polymerisationsverfahren verwendeten Initiatoren, Polymerisationsregler und Katalysatoren sind dem Durchschnittsfachmann bekannt.

Initiatoren für "Atom Transfer Radical Polymerization" sind z. B.
Halogenalkane mit 1 bis 10 C-Atome, wie Tetrabromkohlenstoff und 1,1,1-Trichlorethan;
Halogenalkohole mit 2 bis 10 C-Atome, wie 2,2,2-Trichlorethanol;
2-Halogencarbonsäure und deren Ester mit 2 bis 20 C-Atome, wie Chloressigsäure, 2-Brompropionsäure, 2-Brompropionsäuremethylester, 2-Chlorpropionsäuremethylester, 2-Bromisobuttersäureethylester und 2-Chlorisobuttersäureethylester;
2-Halogencarbonitrile mit 2 bis 10 C-Atome, wie 2-Chloracetonitril und 2-Brompropionitril;
Alkyl- und Arylsulfonsäurechloride mit 2 bis 10 C-Atome, wie Methansulfonsäurechlorid und Benzolsulfonsäurechlorid; und
1-Aryl-1-halogenalkane mit 7 bis 20 C-Atomen, wie zum Beispiel Benzylchlorid, Benzylbromid und 1-Brom-1-phenylethan.

Katalysatoren für ATRP sind zum Beispiel Kupferchlorid- oder -bromidkomplexe stickstoffhaltiger Liganden wie 2,2'-Bipyridin oder N,N,N',N",N"-Pentamethyldiethylentriamin, die auch *in situ* aus Kupfermetall, Ligand und Initiator erzeugt werden können. Weitere Katalysatoren sind in Chem. Rev. 2001, 101, 2921 und in Prog. Polym. Sci. 32 (2007) 93-146 sowie in Chem. Rev. 2007, 107, 2270-2299 aufgeführt.

Weiterhin ist es Stand der Technik, bei einigen Polymerisationsverfahren Addukte des Initiators mit dem Polymerisationsregler einzusetzen, wie zum Beispiel Alkoxyamine für das NMP-Verfahren. Beispiele hierfür sind in Chem. Rev. 2001, 101, 3661, "V. Approaches to Alkoxyamines" oder in Angewandte Chemie Int. Ed. 2004, 43, 6186 angegeben. Weiterhin ist es möglich, Initiatoren/Regler "in situ" zu bilden, wie es z.B: in Macromol. Rapid Commun. 2007, 28, 147 für das NMP-Verfahren beschrieben ist. Weitere Beispiele für Initiatoren/Regler für das NMP-Verfahren sind zum Beispiel 2,2,6,6-Tetramethylpiperidinoxyl (TEMPO) oder N-*tert*-Butyl-N-[1 - diethylphosphono-(2,2-dimethylpropyl)]nitroxyl sowie die in WO 96/24620 und DE 60 2004 008967 aufgeführten Verbindungen.

Beim GTP-Verfahren werden als Initiatoren Silylketenacetale wie zum Beispiel [(1-Methoxy-2-methyl-1-propenyl)oxy]trimethylsilan verwendet. Weitere Beispiele sind in US 4822859, US 4780554 und EP 0184692 B1 zu finden.

Für GTP werden als Katalysatoren Fluoride, die in US 4659782 beschrieben werden, und Oxyanionen, die in US 4588795 beschrieben werden, verwendet. Ein bevorzugter Katalysator für GTP ist Tetrabutylammonium-*m*-chlorobenzoat.

Als Regler für das RAFT-Verfahren kommen beispielsweise Thiocarbonsäureester, Thiocarbamate oder Xanthogensäureester zum Einsatz, die oft in Kombination mit Radikalinitiatoren wie beispielsweise Azoinitiatoren, Peroxidverbindungen oder Persulfaten genutzt werden.

Katalysatoren für die kontrollierte radikalische Polymerisation mit Organokobaltkomplexen sind beispielsweise in Chem. Rev. 2001, 101, 3611 aufgeführt.

Weitere Beispiele für die für die lebenden, kontrollierten Polymerisationsverfahren verwendeten Initiatoren, Polymerisationsregler und Katalysatoren sind in der oben angeführten Literatur zu den Polymerisationstechniken genannt. Auch der Einsatz sog. dual-bzw. heterofunktionaler Initiatoren, beispielsweise in Prog. Polym. Sci. 31 (2006) 671-722 beschrieben, ist möglich.

Die aufgeführten Polymerisationen können lösemittelfrei in Substanz oder in organischen Lösemitteln und/oder Wasser erfolgen. Bei Verwendung von Lösemitteln kann die Polymerisation als klassische Lösemittelpolymerisation, bei der das Polymer im Lösemittel gelöst ist, oder als Emulsions- oder Miniernulsionspolymerisation, wie sie zum Beispiel in Angewandte Chemie Int. Ed. 2004, 43, 6186 und Macromolecules 2004, 37, 4453 beschrieben wird, durchgeführt werden. Das erhaltene Emulsions- bzw. Miniemulsionspolymerisat kann durch Salzbildung wasserlöslich gemacht werden, so dass eine homogene Polymerlösung entsteht. Die Copolymerisate können jedoch nach der Versalzung immer noch wasserunlöslich sein.

Dabei sind die erhaltenen Copolymerisate nicht zwangsläufig über den Polymerisationsregler als Endgruppe definiert. Die Endgruppe kann beispielsweise nach der Polymerisation ganz oder teilweise abgespalten werden. So ist es zum Beispiel möglich, die Nitroxylendgruppe der Copolymerisate, welche mittels NMP hergestellt wurden, thermisch durch Erhöhung der Temperatur über die Polymerisationstemperatur hinaus abzuspalten. Diese Abspaltung des Polymerisationsreglers kann beispielsweise auch durch Zugabe weiterer chemischer Verbindungen wie Polymerisationsinhibitoren, beispielsweise Phenolderivaten, oder durch ein Verfahren wie es in Macromolecules 2001, 34, 3856 beschrieben ist, geschehen.

Ein schwefelhaltiger RAFT-Regler kann thermisch durch Erhöhung der Temperatur vom Copolymerisat abgespalten, durch Zugabe von Oxidationsmitteln wie Wasserstoffperoxid, Persäuren, Ozon oder anderen Bleichmitteln vom Copolymerisat entfernt oder mit Nucleophilen wie Aminen unter Ausbildung einer Thiolendgruppe umgesetzt werden.

Weiterhin lassen sich die durch ATRP erzeugten Halogenendgruppen durch Eliminierungsreaktionen abspalten oder durch Substitutionsreaktionen in andere Endgruppen umwandelt. Beispiele für solche Transformationen sind in Chem. Rev. 2001, 101, 2921 aufgeführt.

Ein weiterer Gegenstand der vorliegenden Erfindung ist die Herstellung der erfindungsgemäß zum Einsatz kommenden Copolymerisate durch eine lebende, kontrollierte, radikalische Polymerisation oder durch Gruppentransferpolymerisation.

Die so erhaltenen Copolymerisate eigenen sich vorzüglich, die Verträglichkeit von an sich unverträglichen Polyolen als Reaktionskomponenten für die Herstellung von Polyurethanen zu gewährleisten.

Die Unverträglichkeit der Polyolkomponente (1) mit der Polyolkomponente (2) kann u. a. durch deren unterschiedliches Molekulargewicht, deren unterschiedlichen strukturellen Aufbau und/oder deren unterschiedlicher Polarität bedingt sein.

So sind bekannterweise oligomere oder polymere Polyalkylenoxid-Polyole mit kurzkettigen Polyolen unverträglich. Zu einer Entmischung neigen auch Polyole von isocyanatreaktiven, oligomeren bzw. polymeren Polyalkylenoxiden, sofern sie aus unterschiedlichen Alkylenoxiden aufgebaut sind oder unterschiedliche Anteile derselben Art Alkylenoxide aufweisen, wie z. B. Polyethylenoxide und Polypropylenoxiden mit vergleichbaren Molekulargewichten bzw. Polyether aus Ethylenoxid und Propylenoxid mit jeweils ungefähr derselben Anzahl von Struktureinheiten aber unterschiedlichen Anteilen des Ethylenoxids und Propylenoxids.

Dasselbe gilt für Polyester- oder Polyether-Polyester-Polyole.

Mit dem erfindungsgemäßen zum Einsatz kommenden Vermittleradditiv (3) gelingt es, solche auf unterschiedlichen Ursachen beruhende Entmischungstendenzen zu beheben und einphasige Zusammensetzungen der Polyolkomponenten (1) und (2) bis zu deren weiteren reaktiven Umsetzung mit der Polyisocyanatkomponente zu gewährleisten, mindestens eine Woche lang bei 40°C ab deren Vermischung mit dem Vermittleradditiv (3).

Die Polyolkomponente (1) enthält mindestens ein Polyol der allgemeinen Formel

HO-B*-OH,

worin B* für ein divalentes Radikal steht, das ausgewählt ist aus der Gruppe umfassend
(i) Alkylenradikale mit 2 bis 8 C-Atomen;
(ii) Radikale der Formel -CH₂-B'-CH₂-, in denen B' für eine der Gruppen 1a)-5a) 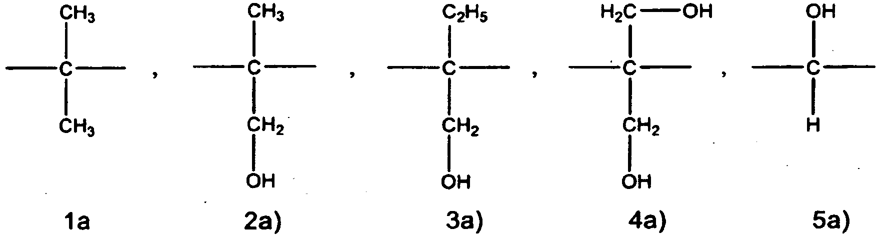 steht,
(iii) Radikale der Strukturformel -(B"-O)ₙ-B"-, in der B" ein Alkylenradikal mit 2 bis 4 C-Atomen und n eine ganze Zahl von 1 bis 20, vorzugsweise 1 bis 10 ist und
(iv) einen von einem Polyether, Polyester oder Polyether-Polyester abgeleiteten Rest.

Eine besonders bevorzugte erfindungsgemäße Zusammensetzung ist eine Zusammensetzung, in der die Polyolkomponente (1) als Gruppe B* ein Gruppe C₂H₄ oder C₄H₈ oder C₆H₁₂ oder C₈H₁₆ aufweist oder die Gruppe B' ein Rest CH(OH) ist.

Vorzugsweise handelt es sich dabei um sog. Kettenverlängerer, d. h. kurzkettige, aliphatische Polyole, besonders bevorzugt aliphatische Polyole mit 2 bis 8 C-Atomen, wie Ethylenglycol, Butandiol, Hexandiol, Octandiol und Glycerin.

Eine weitere besonders bevorzugte Variante für die Polyolkomponente (1) ist ein Polyether-Polyol oder Polyester-Polyol,

Die zweite isocyanatreaktive Polyolkomponente (2) ist vorzugsweise ein Polyalkylenoxid mit Hydroxylgruppen, besonders bevorzugt ein Polyalkylenoxid, das sich von Alkylenoxiden mit 2 bis 4 C-Atomen, bevorzugt von Ethylenoxid und/oder Propylenoxid ableitet. Diese Polyalkylenoxide weisen je nach Startermolekül mit einem niedermolekularem Diol, Glycerin oder höherwertigem Alkohol 2, 3 oder mehr endständige Hydroxylgruppen und 5 bis 100 Alkylenoxideinheiten auf; In Spezialfällen können die Polyalkylenoxide auch mit Aminen, beispielsweise aliphatischen Diaminen, gestartet worden sein. Sofern die höhermolekulare Polyolkomponente aus nicht nur einem bestimmten Alkylenoxid aufgebaut ist, kann das entsprechende Polyalkylenoxid einen statistischen oder blockartigen Aufbau aufweisen, wobei bei einem blockartigen Aufbau sich statistisch aufgebaute Blöcke mit Blöcken aus jeweils nur einem bestimmten Alkylenoxid abwechseln können.

Weiterhin bevorzugt sind als Polyolkomponente (2) Polyesterpolyole und/oder Polyether/Polyester-Polyole.

Eine besonders bevorzugte Kombination der an sich unverträglichen Polyolkomponente (1) und (2) ist ein kurzkettiges aliphatisches Diol oder Glycerin, gemischt mit einem Polyether-, Polyester- oder Polyether/Polyester-Polyol

Ebenso bevorzugt ist eine Mischung von miteinander unverträglichen Polyetherpolyolen mit Polyesterpolyolen oder unterschiedlichen Polyetherpolyolen oder unterschiedlichen Polyesterpolyolen oder unterschiedlichen Polyether/Polyestermischungen.

Mit Hilfe des Vermittleradditivs (3), vorzugsweise in flüssiger Form wie als Flüssigkeit an sich oder in gelöster Form, gelingt es, bei dem an sich unverträgliche Polyolgemisch durch einfaches Zumischen und einmaliges Durchmischen den Zeitraum der Phasenseparation bis zur Umsetzung der Polyole zu Polyurethanen zu verlängern.

Bevorzugt liegt das zugesetzte Copolymerisat in der erhaltenen Polyol-Mischung nicht in Form fester Partikel vor.

Zur Herstellung der erfindungsgemäßen Zusammensetzungen werden die Polyolkomponente (1) und die damit an sich unverträgliche Polyolkomponente (2) in Gegenwart des Vermittleradditivs (3) homogenisiert, vorzugsweise durch Schütteln, Rütteln oder Rühren. Ggf. übliche Hilfsstoffe und/oder Zusatzstoffe, die bei der Herstellung von Polyurethanen Verwendung finden, können bei Bedarf schon mit eingemischt werden. Alternativ können diese Stoffe auch zu einem späteren Zeitpunkt unmittelbar vor der Umsetzung zu Polyurethanen zugegeben werden.

Beispiele für solche Hilfs- und Zusatzstoffe sind Katalysatoren und Beschleuniger (beispielsweise in Form von basischen Verbindungen wie tertiären Aminen oder in Form von metallorganischen Verbindungen wie Zinn-Organylen), Blähmittel (physikalische Blähmittel wie z.B. Kohlenwasserstoffe oder halogenierte Kohlenwasserstoffe, sowie chemische Blähmittel wie z.B. Wasser oder Carbonsäuren), Schaumstabilisatoren, Antischaummittel, Entlüfter, Viskositätsreduzierer, Thixotropiermittel, Wärmestabilisatoren, Flammschutzmittel, Netz- und Dispergiermitteln, Stabilisatoren (z.B. UV-Stabilisatoren und andere Lichtschutzmittel, Hydrolysestabilisatoren), Oxidationsinhibitoren, Farbstoffe, Pigmente, organische oder anorganische Füllstoffe, Prozessadditive, Haftvermittler, Trennmittel, Weichmacher, Antistatika, Lösemittel.

In einer bevorzugten Ausführungsform der erfindungsgemäßen Zusammensetzungen beträgt, bezogen auf 100 Gew.% der Komponenten (1)-(3) der Zusammensetzung, der Anteil
der Polyolkomponente (1) von 1 bis 99 Gew.%,
der Polyolkomponente (2) von 1 bis 99 Gew.%,
des Vermittleradditivs (3) von 0,1 bis 10 Gew.%,
wobei die Komponenten (1) - (3) zusammen immer 100 Gew% ergeben müssen.

Besonders bevorzugt ist eine erfindungsgemäße Zusammensetzung, in der, bezogen auf 100 Gew.% aus der Polyolkomponente (1), der Polyolkomponente (2) und aus dem Vermittleradditiv (3), der Anteil des Vermittleradditivs (3) 0,25 bis 5 Gew.%, ganz besonders bevorzugt 0,5 bis 4 Gew.% beträgt.

Die erfindungsgemäßen Zusammensetzungen können als stabile Polyolkomponente zur Herstellung von Polyurethanen eingesetzt werden, die durch deren Umsetzung mit organischen Polyisocyanat-Verbindungen in Gegenwart geeigneter Katalysatoren erfolgt.

Beispiele für geeignete organische Polyisocyanate sind organische Verbindungen mit mindestens zwei Isocyanatgruppen. Diese Verbindungen sind zur Herstellung von Polyurethanen bekannt. Geeignete organische Polyisocyanate umfassen Kohlenwasserstoff·diisocyanate, wie Alkylen- und Arylendiisocyanate, sowie bekannte Triisocyanate. Geeignete Polyisocyanate sind z.B. 1,2-Diisocyanatethan, 1,3-Diisocyanatpropan, 1,2-Diisocyanatopropan, 1,4-Diisocyanatbutan, 1,5-Diisocyanatpentan, 1,6-Diisocyanathexan, Bis-(3-isocyanatpropyl)-ether, Bis-(3-isocyanatpropyl)-sulfid, 1,7-Di-isocyanatheptan, 1,5-Diisocyanat-2, 2-Dimethylpentan, 1,6-Diisocyanat-3-methoxyhexan, 1,8-Diisocyanatoctan, 1,5-Diisocyanat-2, 2,4-trimothylpentan, 1,9-Diisocyanatnonan, 1,10-Diisocyanat-propylether von 1,4-Butylenglykol, 1,11-Diisocyanatundocan, 1,12-Diisocyanatdodecan, Bis-(isocyanathexyl)-sulfid, 1,4-Diisocyanatbenzol, 2,4-Diisocyanattoluol, 2,6-Diisocyanattoluol, 2,4-Diisocyanat-1-chlorbenzol, 2,4-Diisocyanat-1-nitrobenzol und 2,5-Diisocyanat-1-nitrobenzol sowie Mischungen derselben. Weitere geeignete Verbindungen umfassen 4,4-Diphenylmethandiisocyanat, 1,5-Naphthalindiisocyanat, Isophorondiisocyanat und 1,4-Xyloldiisocyanat. Außerdem sind geeignete Verbindungen die modifizierten flüssigen MDI-Isocyanate der US PS 3 384 653 und verschiede quasi-Vorpolymerisate der US PSS 3 394 164, 3 644 457, 3 457 200 und 3 883 571.

Besonders bevorzugte Polyisocyanate sind Toluoldiisocyanat, Diphenylmethyldiisocyanat (in Form von "Monomer-MDI" oder "Polymer-MDI"), Isophorondiisocyanat, Hexamethylendiisocyanat sowie deren Oligomere.

Geeignete Katalysatoren bzw. Schäummittel sind z. B. DOS 2730374 zu entnehmen.

Die Herstellung von Polyurethanen durch Umsetzung der erfindungsgemäßen Zusammensetzungen als gegen Phasenseparation stabilisierte Polyolkomponenten mit Polyisocyanaten kann sowohl der Herstellung von Polyurethan-Schäumen als auch der Herstellung von ungeschäumten Polyurethan-Massen (CASE-Anwendungen) dienen; die Herstellung von Polyurethanen ist literaturbekannt und wird z.B. in R. Leppkes, "Die Bibliothek der Technik, Bd. 91: Polyurethane", Verlag moderne Industrie, Landsberg/Lech 1993, sowie in R. Herrington, K. Hock, "Flexible Polyurethane Foams", Dow Chemical Comp., Midland (USA) 1997, sowie in S. Lee, "The Huntsman Polyurethanes Book"; Huntsman Int. LLC, 2002, sowie in U. Meier-Westhues, "Polyurethane - Lacke, Kleb- und Dichtstoffe", Vincentz Network, 2007, sowie in G. Oertel, "Kunststoffhandbuch, Bd. 7: Polyurethane", Hanser Fachbuch, 2004, sowie in K. Uhlig, "Polyurethan-Taschenbuch", Hanser Fachbuchverlag, 2005 beschrieben.

Gegenstand der vorliegenden Erfindung ist daher auch die Verwendung der erfindungsgemäßen Zusammensetzungen als eine gegen Phasenseparation stabilisierte Polyolkomponente zur Herstellung von Polyurethanen sowie ein Verfahren zur Herstellung von Polyurethanen, bei denen die erfindungsgemäßen Zusammensetzungen umfassend gegen Phasenseparation stabilisierte Polyolmischungen in Gegenwart von Katalysatoren mit organischen Polyisocyanaten zur Reaktion gebracht werden.

Gegenstand der vorliegenden Erfindung sind auch Polyurethanmassen, Polvurethankörper bzw. Polyurethanschäume, welche unter Einsatz einer erfindungsgemäß en Zusammensetzung umfassend eine gegen Phasenseparation stabilisierten Polyolmischunge durch Reaktion mit organischen Polyisocyanaten in Gegenwart von Katalysatoren hergestellt worden sind.

### Beispiele

| *Bezeichnung* | *Erklärung* |
|---|---|
| Polyether A | C₁₃/C₁₅₋Alkohol-gestartetes Polyethylenoxid, durchschnittlich 8 wiederkehrende Ethylenoxid-Einheiten |
| Polyether B | C₁₃/C₁₅-Alkohol-gestartetes Polyethylenoxid, durchschnittlich 11 wiederkehrende Ethylenoxid-Einheiten |
| Esterol C | Hydroxypropylmethacrylat |
| Esterol D | Hydroxyethylacrylat-gestarteter Polyester von ε-Caprolacton (GPC-Daten: Mₙ=590, M_{w}/Mₙ=1,35) |
| Polyol X | Diprane C58/45, ein kommerziell verfügbares Polyolsystem der Firma Dow-Hyperlast (Großbritannien) für den Einsatz in gieß- und sprühbaren Polyester-basierten Polyurethan-Systemen |

Die Molekulargewichte wurden mittels Gelpermeationschromatographie (GPC) bestimmt.

Die Kalibrierung erfolgt mit Polystyrol-Standards mit einem Molekulargewichten von M_{P} 1.000.000 bis 162.

Als Eluent wird Tetrahydrofuran p.A. verwendet.

Die folgenden Parameter werden bei der Doppelmessung eingehalten:

| | |
|---|---|
| Entgasung: | Online - Degasser |
| Durchfluß: | 1 ml/Min. |
| Analysenzeit: | 45 Minuten |
| Detektoren: | Refraktometer und UV-Detektor |
| Injektionsvolumen: | 100 µl - 200 µl |

Die Berechnung der Molmassenmittelwerte M_{w}: Mₙ und Mₚ sowie der Polydispersität M_{w}/Mₙ erfolgt softwaregestützt. Basislinienpunkte und Auswertegrenzen werden entsprechend der DIN 55672 Teil 1 festgelegt.

### I Herstellung der Vermittleradditive

### Herstellung von Copolymer 1

In einem Dreihalskolben mit Rührer, Rückflusskühler und Gaseinlass werden unter Stickstoff-Strom 69,70 g 1-Methoxy-2-propylacetat bei 20°C vorgelegt und mit 7,70 g Butylmethacrylat vermischt. Dann werden 3,75 g 1-Trimethylsiloxy-1-methoxy-2-methylpropen und 0,375 g Tetrabutylammonium-*m*-chlorbenzoat mittels Spritze durch ein Septum zugegeben. Innerhalb von 30 min werden 60,00 g Butylmethacrylat zudosiert. Die Reaktionstemperatur steigt bis auf 40 °C und wird durch Kühlung auf diesem Niveau gehalten. Nach der Zugabe von Butylmethacrylat werden 32,80 g N,N-Dimethylaminoethylmethacrylat innerhalb von 20 min zudosiert, wobei durch Kühlung wieder sichergestellt wird, dass die Temperatur nicht über 40 °C steigt. Nach 30 min Rühren werden 3 ml Ethanol hinzugegeben. Die Monomere wurden vollständig umgesetzt (Restmonomergehalt bestimmt mittels HPLC); Produkt: Mₙ=9100 g/mol gemäß GPC.

### Herstellung von Copolymer 2

In einem Dreihalskolben mit Rührer, Rückflusskühler und Gaseinlass werden unter Stickstoff-Strom 47,2 g 1-Methoxy-2-propylacetat und 3,81g 2-[N-*tert*-butyl-N-[1-diethylphosphono-(2,2-dimethylpropyl)]nitroxy]-2-methylpropansäure sowie 46,00 g Butylacrylat in einen Dreihalsrundkolben vorgelegt und auf 120 °C erwärmt. Man rührt noch 2,5 h bei 120 °C.

Im Anschluss werden 21,00 g N,N-Dimethylaminoethylmethacrylat mit einer Rate von 2 ml/min zudosiert. Hiernach wird weitere 6 h bei 120 °C gerührt; der Umsatz beträgt hiernach über 98% (Restmonomergehalt bestimmt mittels HPLC); Produkt: Mₙ=3000 g/mol gemäß GPC.

### Herstellung der Säure 1

In einem Dreihalskolben mit Rührer, Rückflusskühler und Gaseinlass werden unter Stickstoff-Strom 266,60 g des Polyethers A und 46,60 g Maleinsäureanhydrid zusammen mit 0,18 g Kaliumcarbonat auf 80°C erwärmt und 4 h gerührt. Die Farbe ändert sich dabei von farblos nach braun. Es wird ein Halbester der Maleinsäure erhalten.

### Herstellung der Säure 2

In einem Dreihalskolben mit Rührer, Rückflusskühler und Gaseinlass werden unter Stickstoff-Strom 1414,06 g des Polyethers B und 200,23 g Maleinsäureanhydrid zusammen mit 84,98 g 1-Methoxy-2-propylacetat und 0,73g Kaliumcarbonat auf 80°C erhitzt und 4 h gerührt. Die Farbe ändert sich dabei von farblos nach braun. Es wird ein Halbester der Maleinsäure erhalten.

### Herstellung der Säure 3

In einem Dreihalskolben mit Rührer, Rückflusskühler und Gaseinlass werden unter Stickstoff-Strom 100,00 g des Polyethers A, 34,12 g Trimellithsäureanhydrid und 0,134 g p-Toloulsulfonsäure 5 h lang bei 170°C gerührt.

### Herstellung eines Salzes von Copolymer 1 (=Polymer 3)

In einem Dreihalskolben mit Rührer, Rückflusskühler und Gaseinlass werden unter Stickstoff-Strom 50,32 g der bei der Herstellung von Copolymer 1 erhaltenen Lösung (enthaltend 30,19 g des Copolymers in 20,13 g 1-Methoxy-2-propylacetat) sowie 49,68 g der bei der Herstellung von Säure 2 erhaltenen Lösung (enthaltend 47,20 g der polymeren Säure und 2,48 g 1-Methoxy-2-propylacetat) über 3 h hinweg bei 120°C gerührt.

### Herstellung eines Salzes von Copolymer 2 (=Polymer 4)

In einem Dreihalskolben mit Rührer, Rückflusskühler und Gaseinlass werden unter Stickstoff-Strom 50,32 g der bei der Herstellung von Copolymer 2 erhaltenen Lösung (enthaltend 30,19 g des Copolymers in 20,13 g 1-Methoxy-2-propylacetat) sowie 49,68 g der bei der Herstellung von Säure 2 erhaltenen Lösung (enthaltend 47,20 g der polymeren Säure und 2,48 g 1-Methoxy-2-propylacetat) über 3 h hinweg bei 120°C gerührt.

### Herstellung eines Salzes VCopolymer 1 (=Polymer 5)

In einem Dreihalskolben mit Rührer, Rückflusskühler und Gaseinlass werden unter Stickstoff-Strom 20,00 g der bei der Herstellung von Copolymer 1 erhaltenen Lösung (enthaltend 12,0 g des Copolymers in 8,0 g 1-Methoxy-2-propylacetat) sowie 16,00 g der Säure 1 über 3 h hinweg bei 120°C gerührt.

### Herstellung eines Salzes von Copolymer 2 (=Polymer 6)

In einem Dreihalskolben mit Rührer, Rückflusskühler und Gaseinlass werden unter Stickstoff-Strom 20,00 g der bei der Herstellung von Copolymer 2 erhaltenen Lösung (enthaltend 12,0 g des Copolymers in 8,0 g 1-Methoxy-2-propylacetat) sowie 16,00 g der Säure 1 über 3 h hinweg bei 120°C gerührt.

### Herstellung eines Salzes von Copolymer 1 (=Polymer 7)

In einem Dreihalskolben mit Rührer, Rückflusskühler und Gaseinlass werden unter Stickstoff-Strom 20,00 g der bei der Herstellung von Copolymer 2 erhaltenen Lösung (enthaltend 12,0 g des Copolymers in 8,0 g 1-Methoxy-2-propylacetat) sowie 45,00 g der Säure 3 über 3 h hinweg bei 120°C gerührt.

### Herstellung von Polymer 8 (gemäß US 5,344,584, Vergleichsbeispiel)

In einem Dreihalskolben mit Rührer, Rückflusskühler und Gaseinlass werden unter Stickstoff-Strom 612,90 g ε-Caprolacton vorgelegt und 1 Stunde bei 80°C gerührt. Anschließend gibt man 100,00 g 2-Butyl-1-octanol und 0,14 g einer 10%-igen Lösung von Dibutylzinndilaurat in Xylol hinzu und rührt 5 h bei 160°C. Man lässt auf 20°C abkühlen, wobei eine wachsartige Substanz entsteht.

100 g des erhaltenen Reaktionsprodukts werden entnommen und in einem Dreihalskolben mit Rührer, Rückflusskühler und Gaseinlass werden unter Stickstoff-Strom auf 80 °C erhitzt. Innerhalb von 30 min werden 8,50 g Polyphosphorsäure zugegeben. Man rührt weitere 4 h bei 80°C. Nach Abkühlen auf 20°C erhält man eine wachsartige Substanz.

### II Anwendungstechnische Beispiele

### Allgemeine Vorschrift zur Durchführung des Separationstests:

64,0 g Polyol X und 16,0 g 1,4-Butandiol werden in einem Becher gemischt. Es wird die in Tabelle 1 angegebene Menge des Vermittleradditivs zugesetzt. Hiernach wird das Gemisch 120 Sekunden mit einem Dissolver (Zahnscheibe, 40 mm Durchmesser, 930 Umdrehungen pro Minute) homogenisiert und im Anschluss in ein zylinderförmiges, verschließbares 100 ml-Glasgefäß (Durchmesser: 3,5 cm, Höhe: 14 cm) überführt.

Die Lagerung erfolgt bei 40°C im verschlossenen Gefäß. Nach bestimmten Zeitspannen wird das Gemisch visuell auf einsetzende Separation überprüft. Die Bildung einer zweiten Phase erfolgt an der Oberfläche der flüssigen Mischung.

**Tabelle 1.**

| *Additiv-Nr.* | *Additiv-Menge ^{a}* | *nach 36 h* | *nach 3 Tagen* | *nach 7 Tagen* | *nach 14 Tagen* | *nach 21 Tagen* |
|---|---|---|---|---|---|---|
| Control | 0 | o | - | - | - | - |
| Polymer 3 | 2,42 g | ++ | ++ | ++ | ++ | ++ |
| Polymer 4 | 2,42 g | ++ | ++ | ++ | ++ | ++ |
| Polymer 5 | 2,42 g | ++ | ++ | ++ | ++ | + |
| Polymer 6 | 2,42 g | ++ | ++ | ++ | ++ | ++ |
| Esterol C^{b} | 2,42 g | + | + | o | o | o |
| Esterol D^{b} | 2,42 g | o | - | - | - | - |
| Polymer 8^{c} | 2,42 g | n.b.* | n.b.* | n.b.* | n.b.* | n.b.* |

| | | | | | | |
|---|---|---|---|---|---|---|
| ^{a}) die eingesetzte Menge, bezogen auf die in der allgemeinen Vorschrift angegebenen Mengen an Polyol X und 1,4-Butandiol; die 2,42 g Additivsubstanz von Polymer 3 bis Polymer 6 entsprechen jeweils 3,12 g der gemäß den erfindungsgemäßen Beispielen erhaltenen, in 1-Methoxy-2-propylacetat gelösten Copolymeren. ^{b}) gemäß US 4,673,696 ^{c}) gemäß US 5,344,584 *) konnte nicht bestimmt werden, da der Zusatz des Polymers 8 zu einer Eindickung des Systems führte | | | | | | |

### Erklärung:

- ++: keine Separation
- +: minimale beginnende Separation
- o: deutlich eingesetzte Separation
- -: vollständige Separation

## Patentansprüche

1. Eine eine lagerstabite Einphasigkeit aufweisende, flüssige Zusammensetzung umfassend
(1) eine isocyanatreaktive Polyol-Komponente
(2) wenigstens eine weitere mit der Polyol-Komponente (1) an sich unverträgliche, isocyanatreaktive Polyol-Komponente und
(3) als Vermittleradditiv wenigstens ein, die Einphasigkeit zwischen den Polyol-Komponenten (1) und (2) bewirkendes Copolymerisat.
wobei das Copolymerisat die folgenden Struktureinheiten I bis VI umfassen kann und aus wenigstens einer der Struktureinheiten I bis III und aus wenigstens einer der Struktureinheiten IV bis VI aufgebaut ist: 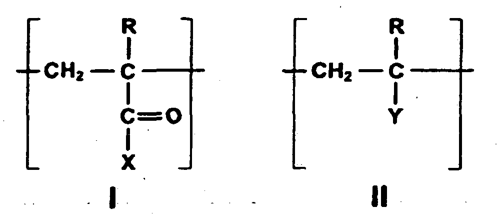 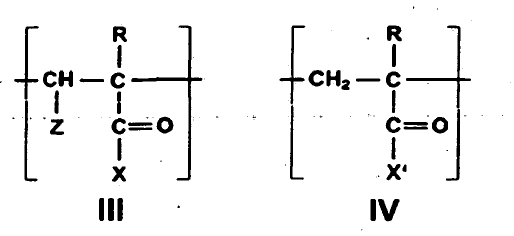 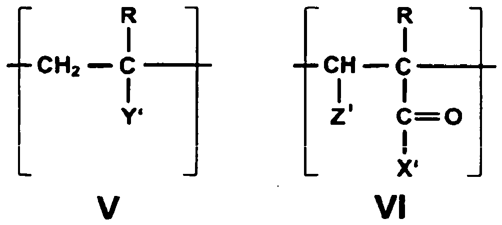 worin
R für Wasserstoff oder einen Alkylrest steht,
X für eine -OR₁ Gruppe oder eine 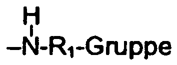 steht, worin
R₁ für Wasserstoff, einen Alkylrest, einen Alkenylrest, einen eine funktionelle Gruppe aufweisenden Alkylenrest, einen Cycloalkylrest, einen aromatischen Rest, wobei jeder dieser Reste ggfs. auch substituiert sein kann, einen Polyether-Rest oder Polyester-Rest oder einen Polyether/Polyester-Rest steht;
Y für einen ggfs. substituierten, aromatischen ggfs. wenigstens ein Hetereoatom als Ringglied aufweisenden, nicht basischen Rest mit 4-12 C-Atomen, einen
Lactam-Rest mit 4-8 C-Atomen, einen
über eine -O- bzw. 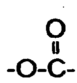 Brücke verbundenen
Polyether- bzw. Polyester-Rest oder eine 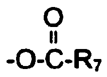 Gruppe, worin R₇ für einen ggfs. substituierten Alkylrest oder einen ggfs. substituierten Cycloalkylrest steht;
Z für eine -COLOR₁ Gruppe, worin R₁ die vorstehend angegebene Bedeutung hat, oder
Z zusammen mit der Gruppe 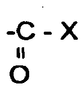 mit X in der Bedeutung einer -OR₁ Gruppe und R₁ für Wasserstoff eine cyclische Anhydridgruppe
oder mit X in der Bedeutung einer Gruppe 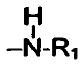 eine cyclische Imidgruppe bildet, deren Stickstoff mit einem Rest R₁ mit der vorstehend angegebenen Bedeutung substituiert ist,
X' für eine 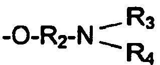 Gruppe oder eine entsprechende, quarternierte 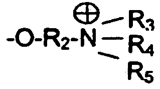 * S^{⊖} Gruppe,
für eine 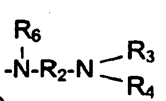 Gruppe oder eine entsprechende, quarternierte 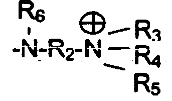 * S^{⊖}Gruppe,
worin R₂ für einen aliphatischen Rest, vorzugsweise einen Alkylenrest, oder einen aromatischen Rest, vorzugsweise Arylenrest, steht, R₃, R₄ und R₅ gleich oder verschieden, einen Alkylrest, einen Arylrest oder Arylalkylenrest stehen, und die Reste R₃ - R₅, die ggfs. mit einer funktionellen Gruppe, vorzugsweise einer Hydroxylgruppe, substituiert sein können, und R₆, gleich oder verschieden, die Bedeutung einer der Reste von R₃- R₅ hat oder für Wasserstoff steht,
S^{⊖} für den verbleibenden, anionischen Rest einer der nachstehend aufgeführten Alkylierungs-Verbindungen (4'), vorzugsweise für ein Halogenid-Anion, besonders bevorzugt Chlorid, Bromid oder Iodid, für ein Sulfat-Anion- oder Carboxylat-Anion steht,
oder
X' für eine endsprechende, versalzte 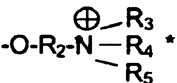 A^{⊖} Gruppe oder eine
entsprechende, versalzte 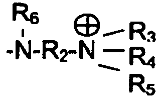 * A^{⊖} Gruppe steht, worin
R₂ die vorstehend angegebene Bedeutung hat,
R₃, R₄, R₅ und R₆ die vorstehend angegebene Bedeutung haben, wobei aber wenigstens einer der Reste R₃ - R₅ für Wasserstoff steht, und
A^{⊖} für den verbleibenden, anionischen Rest einer der nachstehend aufgeführten, zur Versalzung eingesetzten Verbindungen (4) steht,
oder
X' in Bedeutung einer 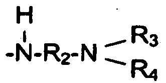 Gruppe zusammen mit Z' als eine -COOR₁ Gruppe eine cyclische Imidgruppe bildet, deren Stickstoff mit der 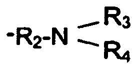 Gruppe oder mit einer entsprechenden, quarternierten 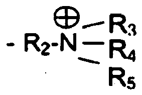 * S^{⊖} Gruppe oder mit einer entsprechenden, versalzten 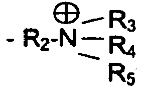 * A^{⊖} Gruppe substituiert ist,
worin die Reste R₃, R₄, R₅, A^{⊖}
und S^{⊖} die vorstehend angegebene Bedeutung haben,
Y' für ein N-haltiges, heterocyclisches, basisches Radikal, vorzugsweise ein aromatisches, wenigstens ein N-Atom und ggfs. weitere Heteroatome als Ringglieder enthaltendes basisches Radikal oder für ein gesättigtes oder ungesättigtes cycloaliphatisches, wenigstens ein N-Atom und ggfs. weitere Heteroatome als Ringglieder enthaltenes basisches Radikal,
Z', gleich oder verschieden von X', für eine Gruppierung mit der Bedeutung von X' oder für eine -COOR₁ Gruppe steht, worin R₁ die vorstehend angegebene Bedeutung hat,
worin die Struktureinheiten IV bis VI ggfs. zumindest teilweise als mit mindestens einer vorzugsweise oligomeren, wenigstens eine saure Gruppe aufweisenden, organischen Verbindung (4) versalzen und/oder ggfs. zumindest teilweise als mit einer organischen Alkylierungsverbindung (4') quaterniert vorliegen.

2. Eine Zusammensetzung nach Anspruch 1, **dadurch gekennzeichnet, dass** die Polyolkomponente (1) wenigstens ein kurzkettiges Polyol, vorzugsweise ein aliphatisches Polyol mit 2 - 8 C-Atomen und mindestens zwei Hydroxylgruppen, vorzugsweise Ethylenglycol, Butandiol, Hexandiol oder Glycerin, oder ein Polyalkylenoxid mit wenigstens zwei endständigen Hydroxylgruppen ist und die Polyolkomponente (2) wenigstens ein Polyetherpolyol und/oder ein Polyesterpolyol ist.

3. Eine Zusammensetzung nach Ansprüche 1 oder 2, **dadurch gekennzeichnet, dass** in den Struktureinheiten I bis VI
R für Wasserstoff oder einen Methyl- oder Ethyl-Rest steht,
X für eine -NH-R₁ Gruppe oder eine -OR₁ Gruppe steht, worin R₁ für Wasserstoff, einen Alkylrest mit 1 bis 6 C-Atomen, einen Alkylenrest mit 1 bis 6 C-Atomen und einer OH-Gruppe, vorzugsweise als Endgruppe, oder einen Polyalkylenoxid-Rest steht,
Y für einen ggfs. substituierten Phenyl-, Naphtyl-, Pyrrolidin-Rest, einen ε-Caprolactam Rest, einen über eine -0- Brücke verbundenen Polyalkylenoxid- oder einen Acetat-Rest steht,
Z für eine -COOR₁-Gruppe steht, worin R₁ die vorstehend angegebene Bedeutung hat, oder
Z zusammen mit der Gruppe 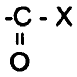 mit X in der Bedeutung einer -OR₁ Gruppe und R₁ für Wasserstoff eine cyclische Anhydridgruppierung
oder mit X in der Bedeutung einer Gruppe 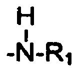 eine cyclische Imidgruppierung bildet, deren Stickstoff mit einem Rest R₁ mit der vorstehend angegebenen Bedeutung substituiert ist,
X' für eine 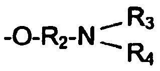 Gruppe oder eine entsprechende, quaternierte 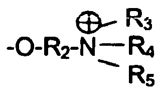 * S^{⊖} Gruppe, für eine 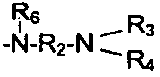 Gruppe oder eine
entsprechende, quaternierte 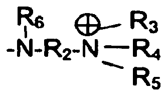 * S^{⊖} Gruppe steht,
worin R₂ für einen Alkylenrest mit 1 bis 6 C-Atomen,
R₃, R₄, R₅ oder R₆, gleich oder verschieden, für einen Alkylrest mit 1 - 3 C-Atomen oder einen Benzylrest steht, wobei die Reste R₃ - R₅ ggfs. jeweils durch eine -OH Gruppe substituiert sein können,
S^{⊖} für den verbleibenden, anionischen Rest einer der nachstehend aufgeführten Alkylierungs-Verbindungen (4'), vorzugsweise für ein Halogenid-Anion, besonders bevorzugt Chlorid, Bromid oder Iodid, für eine Sulfat-Anion- oder Carboxylat-Anion steht,
oder X' für eine entsprechende, versalzte 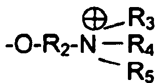 * A^{⊖} Gruppe oder
eine entsprechende, versalzte 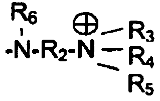 * A^{⊖} Gruppe steht, worin
R2 die vorstehend angegebene Bedeutung hat,
R₃, R₄, R₅ und R₆ die vorstehend angegebene Bedeutung haben, wobei aber wenigstens einer der Reste R₃ - R₅ für Wasserstoff steht, und
A^{⊖} für den verbleibenden, anionischen Rest einer der nachstehend aufgeführten, zur Versalzung eingesetzten Verbindungen (4) steht,
oder X' in der Bedeutung einer 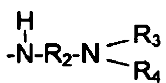 Gruppe zusammen mit Z' als eine -COOR₁ Gruppe eine cyclische Imidgruppe bildet, deren Stickstoff mit der 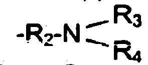 Gruppe oder mit einer entsprechenden, quarternierten oder versalzten Gruppe substituiert ist,
Y' für einen basischen, aliphatischen oder aromatischen, heterocyclischen Rest mit 5 - 10 Ringgliedern und wenigstens einem Stickstoffatom als Ringglied steht, vorzugsweise für einen Imidazol-, Pyrrol-, Pyrazol-, Pyrimidin-, Purin-, Chinolin- oder Pyridin-Rest steht;
Z', gleich oder verschieden von X', für eine Gruppierung mit der vorstehenden Bedeutung für X' oder für eine -COOR₁ Gruppe, worin R₁ die vorstehend angegebene Bedeutung hat, steht,
worin die Struktureinheiten IV bis VI ggfs. als mit mindestens einer vorzugsweise oligomeren, wenigstens eine saure Gruppe aufweisenden, organischen Verbindung (4) vorzugsweise bis zu 75% versalzen und/oder ggfs. als mit wenigstens einer organischen Alkylierungsverbindung (4') quarterniert vorliegen.

4. Eine Zusammensetzung nach einem der Ansprüche 1 bis 3, **dadurch gekennzeichnet, dass** der Anteil der Struktureinheiten IV-VI im nicht-versalzten bzw. nicht quarternierten Zustand von 5 bis 95 Gew.%, bevorzugt von 15 bis 60 Gew.% und besonders bevorzugt von 20 bis 45 Gew.%, bezogen auf das Gesamtgewicht des Copolymerisats (3), beträgt.

5. Eine Zusammensetzung nach einem der Ansprüche 1 bis 4, **dadurch gekennzeichnet, dass** das Copolymerisat ein zahlengemitteltes Molekulargewicht von 1000 bis 250.000, vorzugsweise 2000 bis 25.000, besonders bevorzugt 2500 bis 10.000 g/mol aufweist.

6. Eine Zusammensetzung nach einem der Ansprüche 1 bis 5, **dadurch gekennzeichnet, dass** das Copolymerisat einen statistischen, gradientenartigen oder blockartigen Aufbau der copolymerisierten Struktureinheiten aufweist, der ggfs. Kammstrukturen umfasst.

7. Eine Zusammensetzung nach Anspruch 6, **dadurch gekennzeichnet, dass** das Copolymerisat ein Diblockcopolymer oder Triblockcopolymer ist, bei dem sich vorzugsweise die Menge der Struktureinheiten IV-VI in zwei benachbarten Blöcken um mindestens 5 Gew.% unterscheidet.

8. Eine Zusammensetzung nach einem der Ansprüche 1 bis 7, **dadurch gekennzeichnet, dass** das Copolymerisat durch eine kontrollierte radikalische Polymerisation, vorzugsweise durch Atom Transfer Radical Polymerization, Reversible Addition-Fragmentation Chain Transfer Polymerization, durch kontrollierte radikalische Polymerisation in Gegenwart von Nitroxylverbindungen als Polymerisationsregler, durch kontrollierte radikalische Polymerisation mit Tetraphenylethan, durch kontrollierte radikalische Polymerisation mit 1,1-Diphenylethen, durch kontrollierte radikalische Polymerisation mit Inifertem, durch kontrollierte radikalische Polymerisation in Gegenwart von Thioketonen oder durch kontrollierte radikalische Polymerisation in Gegenwart von Organokobaltkomplexen, oder eine ionische Polymerisation hergestellt worden ist.

9. Eine Zusammensetzung nach Anspruch 8, **dadurch gekennzeichnet, dass** das Copolymerisat durch Gruppentransferpolymerisation hergestellt worden ist.

10. Eine Zusammensetzung nach einem der Ansprüche 1-9, **dadurch gekennzeichnet, dass** die Struktureinheiten I-III des Copolymerisats durch Polymerisation von ethylenisch ungesättigten Monomeren ausgewählt aus der Gruppe umfassend (Meth)acrylsäureester, die ggfs. funktionelle Gruppen wie OH-Halogen-, Lacton- und/oder Epoxy-Gruppen aufweisen oder sich von Polyethern ableiten können, (Meth)acrylsäureamide, ggfs. substituiertes Styrol, Maleinsäure, deren Anhydrid, Halbester oder Diester, Maleinimide, Vinylgruppen aufweisende, nicht basische Heterocyclen mit wenigstens einem N-Atom als Ringglied, und Vinylester von Carbonsäuren erhalten worden sind und die Struktureinheiten IV-VI des Copolymerisats durch Polymerisation von ethylenisch ungesättigten Monomeren ausgewählt aus der Gruppe umfassend ethylenisch ungesättigten Monomeren, die Aminogruppen aufweisen, und Vinylgruppen aufweisende, basische, vorzugsweise aromatischen Heterocyclen mit wenigstens einem protonierbaren N-Atom als Ringglied, vorzugsweise wenigstens eine Aminogruppe aufweisende (Meth)acrylate und (Meth)acrylamide, besonders bevorzugt wenigstens eine Aminogruppe aufweisende C1-C6 Alkyl(meth)acrylate und wenigstens eine Aminogruppe aufweisende (C1-C6)alkyl(meth)acrylamide, und 4-Vinylpyridin, 2-Vinylpyridin und Vinylimidazol, und oxiranhaltigen, ethylenisch ungesättigten Monomeren, vorzugsweise Glycidylmethacrylat, die mit entsprechenden, reaktiven Aminen umgesetzt werden, erhalten worden sind.

11. Eine Zusammensetzung nach einem der Ansprüche 1 bis 10, **dadurch gekennzeichnet, dass** das Copolymerisat in flüssiger Form vorliegt.

12. Eine Zusammensetzung nach einem der Ansprüche 1 bis 11, **dadurch gekennzeichnet, dass** das Copolymerisat mit mindestens einer, vorzugsweise mindestens oligomeren, organischen Verbindung, die Carboxyl-, Sulfon-, Phosphon- und/oder Phosphorsäure-Gruppen aufweist, zumindest partiell versalzen ist.

13. Eine Zusammensetzung nach Anspruch 12, **dadurch gekennzeichnet, dass** die säuregruppenhaltige, organische Verbindung ein Polyalkylenoxid, vorzugsweise aus einem Ethylen- und/oder Propylenoxid mit vorzugsweise 3-15 wiederkehrenden Einheiten, mit mindestens einer Carboxyl-, Sulfon-, Phosphon- oder Phosphorsäure-Gruppe, vorzugsweise mit mindestens einer endständigen Carboxyl- und/oder Phosphorsäure-Gruppe, ist, wobei das Polyalkylenoxid zusätzlich mit mindestens einer Fettsäure über eine Ester-Gruppierung bzw. zusätzlich mit mindestens, einem C1- bis C24-Alkohol über eine Ether-Gruppierung verbunden sein kann.

14. Eine Zusammensetzung nach einem der Ansprüche 1-13, **dadurch gekennzeichnet, dass** das Copolymerisat zur Quartemierung mit mindestens einer organischen Verbindung ausgewählt aus der Gruppe umfassend ggfs. substituierte Alkylhalogenide, Dialkylsulfate und/oder Epoxidverbindungen in Kombination mit Säuren umgesetzt worden ist.

15. Eine Zusammensetzung gemäß einem der Ansprüche 1-14, **dadurch gekennzeichnet, dass** das Vermittleradditiv aus einer Kombination aus einem zumindest partiell versalzten Copolymerisat und aus einem zumindest partiell quarternierten Copolymerisat besteht.

16. Eine Zusammensetzung nach einem der Ansprüche 1-15, **dadurch gekennzeichnet, dass** zumindest 5 Gew.% des Copolymerisats aus versalzten und/oder quarternierten Aminogruppen aufweisenden Struktureinheiten bestehen.

17. Eine Zusammensetzung nach einem der Anprüche 1 bis 16, **dadurch gekennzeichnet, dass** die Zusammensetzung noch Hilfs- und Zusatzstoffe enthält, die vorzugsweise wenigstens eine Verbindung ausgewählt aus der Gruppe umfassend Katalysatoren, Beschleuniger, Kettenvemetzer, Verschäumungsmittel, Schaumstabilisatoren, Antischaummittel, Entlüfter, Viskositätsreduzierer, Thixotropiermittel, Wärmestabilisatoren, Flammschutzmittel ggfs. zusammen mit Oxidationsinhibitoren, Farbstoffe, Pigmente, organische oder anorganische Füllstoffe, Netz- und Dispergiermittel, Prozessadditive, Haftvermittler, Trennmittel, Weichmacher, Antistatika, Oxidationsstabilisatoren, Lösemittel sind.

18. Eine Zusammensetzung nach einem der Ansprüche 1 bis 17, **dadurch gekennzeichnet, dass**, bezogen auf 100 Gew.% aus der Polyol-Komponente (1), der Polyol-Komponente (2) und aus dem Copolymerisats (3), der Anteil der Komponente (1) von 1 bis 99 Gew.%, der Anteil der Komponente (2) von 1 bis 99 Gew.% und der Anteil des Copolymerisats (3) von 0,1 bis 10 Gew.%, vorzugsweise von 0,25 bis 5 Gew.% beträgt, wobei die Menge der Komponenten (1)-(3) in Summe immer 100 Gew.% ergeben muss.

19. Eine Verwendung einer Zusammensetzung gemäß einem der Ansprüche 1 bis 18 zur Herstellung von Polyurethanen, vorzugsweise zur Herstellung einer ungeschäumten oder geschäumten Polyurethanmasse.

20. Eine Verwendung nach Anspruch 19, **dadurch gekennzeichnet, dass** die Zusammensetzung mit wenigstens einer organischen PolyisocyanatKomponente umgesetzt wird.

21. Ein Verfahren zur Herstellung einer ungeschäumten oder geschäumten Polyurethanmasse, **dadurch gekennzeichnet, dass** eine Zusammensetzung nach einem der Ansprüche 1-18 mit mindestens einer organischen Polyisocyanatverbindung in Gegenwart eines Katalysators umgesetzt wird.

22. Ein geschäumter oder ungeschäumter Polyurethanartikel erhältlich durch Umsetzung einer Zusammensetzung gemäß einem der Ansprüche 1 bis 18 mit wenigstens einer organischen Polyisocyanatkomponente.

## Claims

1. A liquid composition having a storage-stable monophasicness, comprising
(1) an isocyanate-reactive polyol component,
(2) at least one further isocyanate-reactive polyol component, this polyol component being inherently incompatible with the polyol component (1), and
(3) as compatibilizer additive at least one copolymer effectuating the monophasicness between the polyol components (1) and (2),
wherein the copolymer may comprise the following structural units I to VI and is constructed of at least one of the structural units I to III and of at least one of the structural units IV to VI: 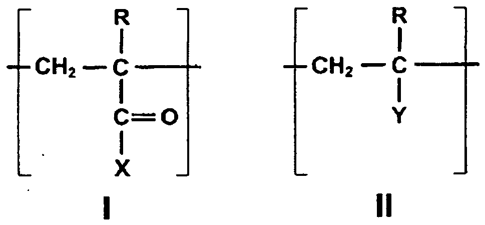 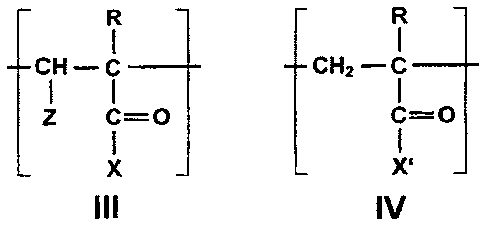 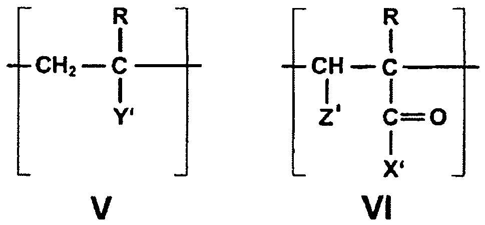 where
R represents hydrogen or an alkyl radical,
X represents an -OR₁ group or an 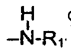 group, where
R₁ represents hydrogen, an alkyl radical, an alkenyl radical, an alkylene radical having a functional group, a cycloalkyl radical, an aromatic radical, wherein each of these radicals may optionally also be substituted, a polyether radical or polyester radical or a polyether/polyester radical;
Y represents an optionally substituted, aromatic non-basic radical of 4-12 carbon atoms which optionally has at least one heteroatom as ring member, a
lactam radical of 4-8 carbon atoms, a
polyether or polyester radical attached by an -O- or 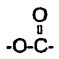 bridge, or an 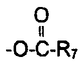 group, where
R₇ represents an optionally substituted alkyl radical or an optionally substituted cycloalkyl radical;
Z represents a -COOR₁ group, where R₁ is as defined above, or
Z combines with the 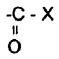 group where X is an -OR₁ group and R₁ represents hydrogen to form a cyclic anhydride group or where X is an 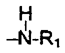 group to form a cyclic imide group whose nitrogen is substituted with an R₁ radical as defined above,
X' represents an 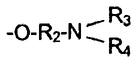 group or a corresponding, quaternized 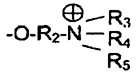 *S^{⊖} group, represents an 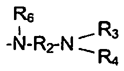 group or a corresponding, quaternized 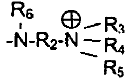 *S^{⊖} group,
where R₂ represents an aliphatic radical, preferably an alkylene radical, or an aromatic radical, preferably arylene radical,
R₃, R₄ and R₅ are the same or different and each represent an alkyl radical, an aryl radical or arylalkylene radical, and the radicals R₃-R₅, which may optionally be substituted with a functional group, preferably a hydroxyl group, and R₆, the same or different, has the meaning of one of R₃-R₅ or represents hydrogen,
S^{⊖} represents the remaining, anionic radical of one of the hereinbelow recited alkylating compounds (4'), preferably a halide anion and more preferably chloride, bromide or iodide, or represents a sulfate anion or carboxylate anion,
or
X' represents a corresponding, salted 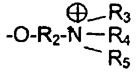 *A^{⊖} group or a corresponding, salted 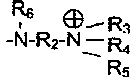 *A^{⊖} group, where
R₂ is as defined above,
R₃, R₄, R₅ and R₆ are each as defined above, but at least one of R₃-R₅ represents hydrogen, and
A^{⊖} represents the remaining, anionic radical of one of the hereinbelow recited salting compounds (4),
or
X' as an 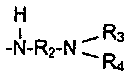 group combines with Z' as a -COOR₁ group to form a cyclic imide group whose nitrogen is substituted with the 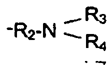 group or with a corresponding, quaternized 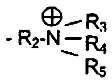 *S^{⊖} group or with a corresponding, *S^{⊖} salted 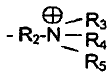 *A^{⊖} group,
where the radicals R₃, R₄, R₅, A^{⊖} and S^{⊖} are each as defined above,
Y' represents an N-containing, heterocyclic, basic free radical, preferably an aromatic basic free radical containing at least one nitrogen atom and optionally further heteroatoms as ring members, or represents a saturated or unsaturated cycloaliphatic basic free radical containing at least one nitrogen atom and optionally further heteroatoms as ring members,
Z', which is identical to or different from X', represents a grouping having the meaning of X' or represents a -COOR₁ group, where R₁ is as defined above,
where the structural units IV to VI are optionally at least partly present as salted with at least one preferably oligomeric organic compound (4) having at least one acidic group and/or optionally at least partly present as quaternized with an organic alkylating compound (4').

2. A composition according to Claim 1, **characterized in that** the polyol component (1) is at least one short-chain polyol, preferably an aliphatic polyol of 2-8 carbon atoms and at least two hydroxyl groups, preferably ethylene glycol, butanediol, hexanediol or glycerol, or a polyalkylene oxide having at least two terminal hydroxyl groups, and the polyol component (2) is at least one polyether polyol and/or a polyester polyol.

3. A composition according to Claim 1 or 2, **characterized in that** in the structural units I to VI
R represents hydrogen or a methyl or ethyl radical,
X represents an -NH-R₁ group or an -OR₁ group, where R₁ represents hydrogen, an alkyl radical of 1 to 6 carbon atoms, an alkylene radical having 1 to 6 carbon atoms and an OH group, preferably as end group, or represents a polyalkylene oxide radical,
Y represents an optionally substituted phenyl, naphthyl or pyrrolidine radical, an ε-caprolactam radical, a polyalkylene oxide radical attached via an -O- bridge, or represents an acetate radical,
Z represents a -COOR₁ group, where R₁ is as defined above, or
Z combines with the 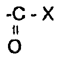 group where X is an -OR₁ group and R₁ represents hydrogen to form a cyclic anhydride grouping or where X is an 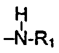 group to form a cyclic imide grouping whose nitrogen is substituted with an R₁ radical as defined above,
X' represents an 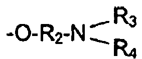 group or a corresponding, quaternized 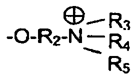 *S^{⊖} group, represents an 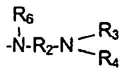 group or a corresponding, quaternized 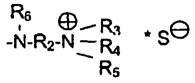 group, where R₂ represents an alkylene radical having 1 to 6 carbon atoms,
R₃, R₄, R₅ or R₆ are the same or different and each represent an alkyl radical of 1-3 carbon atoms or a benzyl radical, where the radicals R₃-R₅ may optionally each be substituted by an -OH group,
S^{⊖} represents the remaining, anionic radical of one of the hereinbelow recited alkylating compounds (4'), preferably a halide anion and more preferably chloride, bromide or iodide, or represents a sulfate anion or carboxylate anion,
or X' represents a corresponding, salted 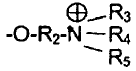 *A^{⊖} group or a corresponding, salted 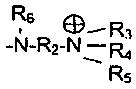 *A^{⊖} group, where
R₂ is as defined above,
R₃, R₄, R₅ and R₆ are each as defined above, but at least one of R₃-R₅ represents hydrogen, and
A^{⊖} represents the remaining, anionic radical of one of the hereinbelow recited salting compounds (4),
or X' as an 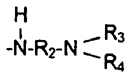 group combines with Z' as a -COOR₁ group to form a cyclic imide group whose nitrogen is substituted with the 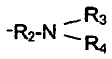 group or with a corresponding, quaternized or salted group,
Y' represents a basic, aliphatic or aromatic, heterocyclic radical having 5-10 ring members and at least one nitrogen atom as ring member, and preferably represents an imidazole, pyrrole, pyrazole, pyrimidine, purine, quinoline or pyridine radical;
Z', which is identical to or different from X', represents a grouping having the above meaning of X' or represents a -COOR₁ group, where R₁ is as defined above,
where the structural units IV to VI are optionally present as preferably up to 75% salted with at least one preferably oligomeric organic compound (4) having at least one acidic group and/or optionally present as quaternized with at least one organic alkylating compound (4').

4. A composition according to any one of Claims 1 to 3, **characterized in that** the proportion of structural units IV-VI in the non-salted and/or non-quaternized state is from 5% to 95% by weight, preferably from 15% to 60% by weight and more preferably from 20% to 45% by weight, based on the total weight of copolymer (3).

5. A composition according to any one of Claims 1 to 4, **characterized in that** the copolymer has a number-averaged molecular weight of 1000 to 250 000, preferably 2000 to 25 000 and more preferably 2500 to 10 000 g/mol.

6. A composition according to any one of Claims 1 to 5, **characterized in that** the copolymer has a random, gradientlike or blocklike construction of copolymerized structural units which optionally comprises comb structures.

7. A composition according to Claim 6, **characterized in that** the copolymer is a diblock copolymer or triblock copolymer in which the amount of structural units IV-VI in two adjacent blocks preferably differs by at least 5% by weight.

8. A composition according to any one of Claims 1 to 7, **characterized in that** the copolymer is produced by a controlled free-radical polymerization, preferably by atom transfer radical polymerization, reversible addition-fragmentation chain transfer polymerization, by controlled free-radical polymerization in the presence of nitroxyl compounds as polymerization regulators, by controlled free-radical polymerization with tetraphenylethane, by controlled free-radical polymerization with 1,1-diphenylethene, by controlled free-radical polymerization with iniferters, by controlled free-radical polymerization in the presence of thioketones or by controlled free-radical polymerization in the presence of organocobalt complexes, or an ionic polymerization.

9. A composition according to Claim 8, **characterized in that** the copolymer is produced by group transfer polymerization.

10. A composition according to any one of Claims 1-9, **characterized in that** the structural units I-III of the copolymer are obtained by polymerization of ethylenically unsaturated monomers selected from the group comprising (meth)acrylic esters which may optionally have functional groups such as OH, halogen, lactone and/or epoxy groups or derive from polyethers, (meth)acrylamides, optionally substituted styrene, maleic acid, maleic acid anhydride, maleic acid monoesters, maleic acid diesters, maleimides, vinyl-containing, non-basic heterocycles having at least one nitrogen atom as a ring member, and vinyl esters of carboxylic acids and the structural units IV-VI of the copolymer are obtained by polymerization of ethylenically unsaturated monomers selected from the group comprising ethylenically unsaturated monomers having amino groups, and vinyl-containing basic, preferably aromatic heterocycles having at least one protonatable nitrogen atom as ring member, preferably (meth)acrylates and (meth)acrylamides having at least one amino group, more preferably C1-C6 alkyl (meth)acrylates having at least one amino group and (C1-C6)alkyl(meth)acrylamides having at least one amino group, and 4-vinylpyridine, 2-vinylpyridine and vinylimidazole, and oxirane-containing, ethylenically unsaturated monomers, preferably glycidyl methacrylate, which are reacted with appropriate, reactive amines.

11. A composition according to any one of Claims 1 to 10, **characterized in that** the copolymer is in liquid form.

12. A composition according to any one of Claims 1 to 11, **characterized in that** the copolymer is at least partially salted with at least one, preferably at least oligomeric, organic compound having carboxyl, sulfonic, phosphonic and/or phosphoric acid groups.

13. A composition according to Claim 12, **characterized in that** the organic compound containing an acid group is a polyalkylene oxide, preferably formed from an ethylene and/or propylene oxide having preferably 3-15 recurring units, having at least one carboxyl, sulfonic, phosphonic or phosphoric acid group, preferably having at least one terminal carboxyl and/or phosphoric acid group, wherein the polyalkylene oxide may be additionally bonded to at least one fatty acid via an ester grouping and/or additionally to at least one C1 to C24 alcohol via an ether grouping.

14. A composition according to any one of Claims 1-13, **characterized in that** the copolymer is quaternized by reaction with at least one organic compound selected from the group comprising optionally substituted alkyl halides, dialkyl sulfates and/or epoxy compounds combined with acids.

15. A composition according to any one of Claims 1-14, **characterized in that** the compatibilizer additive consists of a combination of an at least partially salted copolymer and of an at least partially quaternized copolymer.

16. A composition according to any one of Claims 1-15, **characterized in that** at least 5% by weight of the copolymer consists of salted and/or quaternized amino-containing structural units.

17. A composition according to any one of Claims 1 to 16, **characterized in that** the composition further contains auxiliaries and addition agents which are preferably at least one compound selected from the group comprising catalysts, accelerants, chain crosslinkers, foaming agents, foam stabilizers, antifoams, deaerators, viscosity reducers, thioxotroping agents, heat stabilizers, flame retardants optionally together with oxidation inhibitors, dyes, pigments, organic or inorganic fillers, wetting and dispersing agents, process additives, adhesion promoters, release agents, plasticizers, antistats, oxidation stabilizers, solvents.

18. A composition according to any one of Claims 1 to 17, **characterized in that**, based on 100% by weight formed from polyol component (1), polyol component (2) and copolymer (3), the proportion of component (1) is from 1% to 99% by weight, the proportion of component (2) is from 1% to 99% by weight and the proportion of copolymer (3) is from 0.1% to 10% by weight, preferably from 0.25% to 5% by weight, subject to the proviso that the amount of components (1)-(3) must always sum to 100% by weight.

19. A use of a composition according to any one of Claims 1 to 18 for production of polyurethanes, preferably for producing a foamed or unfoamed polyurethane mass.

20. A use according to Claim 19, **characterized in that** the composition is reacted with at least one organic polyisocyanate component.

21. A process for producing a foamed or unfoamed polyurethane mass, **characterized in that** a composition according to any one of Claims 1-18 is reacted with at least one organic polyisocyanate compound in the presence of a catalyst.

22. A foamed or unfoamed polyurethane article obtainable by reacting a composition according to any one of Claims 1 to 18 with at least one organic polyisocyanate component.

## Revendications

1. Composition liquide présentant un caractère monophasique stable au stockage, comprenant
(1) un composant polyol réactif avec un isocyanate
(2) au moins un autre composant polyol réactif avec un isocyanate, incompatible en soi avec le composant polyol (1) et
(3) en tant qu'additif inducteur au moins un copolymérisat induisant le caractère monophasique entre les composants polyols (1) et (2),
le copolymérisat comprenant les motifs structuraux I à IV suivants et étant constitué d'au moins l'un des motifs structuraux I à III et d'au moins l'un des motifs structuraux IV à VI : 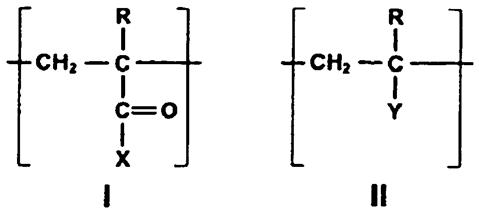 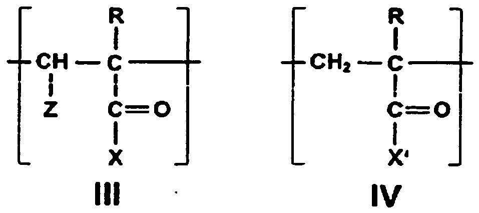 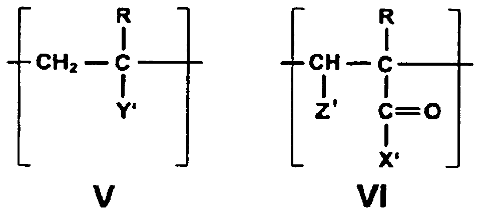 dans lesquels
R représente un atome d'hydrogène ou un radical alkyle,
X représente un groupe -OR₁ ou un groupe 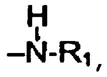 où
R₁ représente un atome d'hydrogène, un radical alkyle, un radical alcényle, un radical alkylène comportant un groupe fonctionnel, un radical cycloalkyle, un radical aromatique, chacun de ces radicaux pouvant éventuellement être également substitué, un radical polyéther ou un radical polyester ou un radical polyéther-polyester ;
Y représente un radical aromatique non basique ayant de 4 à 12 atomes de carbone, éventuellement substitué, comportant éventuellement au moins un hétéroatome en tant que chaînon formant le cycle, un
radical lactame ayant de 4 à 8 atomes de carbone, un
radical polyéther ou polyester relié par un pont
-O- ou 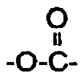 ou un groupe 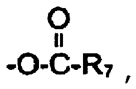 où
R₇ représente un radical alkyle éventuellement substitué ou un radical cycloalkyle éventuellement substitué ;
Z représente un groupe -COOR₁, dans lequel R₁ a la signification donnée précédemment, ou
Z conjointement avec le group 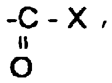 dans lequel X a la signification d'un groupe -OR₁ et R₁ représente un atome d'hydrogène, forme un groupe anhydride cyclique,
ou dans lequel X a la signification d'un groupe 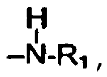 forme un groupe imido cyclique, dont l'atome d'azote est substitué par un radical R₁ ayant la signification donnée précédemment,
X' représente un groupe 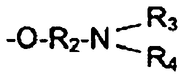 ou un groupe 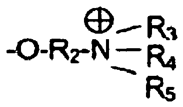 *S^{⊖} quaternisé correspondant, représente un groupe 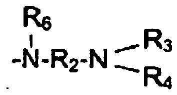 ou un groupe 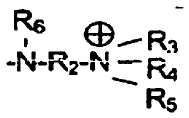 *S^{⊖} quaternisé correspondant,
où R₂ représente un radical aliphatique, de préférence un radical alkylène, ou un radical aromatique, de préférence un radical arylène, R₃, R₄ et R₅, identiques ou différents, représentent un radical alkyle, un radical aryle ou un radical arylalkylène, et les radicaux R₃ - R₅ peuvent éventuellement être substitués par un groupe fonctionnel, de préférence un groupe hydroxy, et R₆, le même ou différent, a la signification de l'un des radicaux de R₃ - R₅ ou représente un atome d'hydrogène,
S^{⊖} représente le radical anionique restant de l'un des composés d'alkylation (4') indiqués ci-après, de préférence un anion halogénure, de façon particulièrement préférée chlorure, bromure ou iodure, un anion sulfate ou un anion carboxylate,
ou
X' représente un groupe 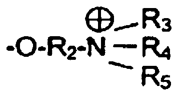 *A^{⊖} salifié correspondant ou un groupe 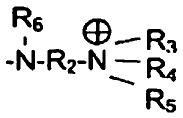 *A^{⊖} salifié correspondant, où
R₂ a la signification donnée précédemment,
R₃, R₄, R₅ et R₆ ont la signification donnée précédemment, mais au moins l'un des radicaux R₃-R₅ représente un atome d'hydrogène, et
A^{⊖} représente le radical anionique restant de l'un des composés (4) utilisés pour la salification, indiqués ci-après,
ou
X' dans la signification d'un groupe 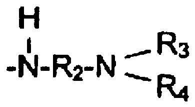 forme conjointement avec Z' en tant qu'un groupe -COOR₁ un groupe imido cyclique, dont l'atome d'azote est substitué par le groupe 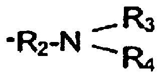 ou par un groupe 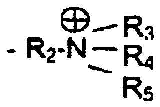 *S^{⊖} quaternisé correspondant ou par un groupe 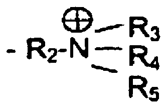 *A^{⊖} salifié correspondant,
les radicaux R₃, R₄, R₅, A^{⊖} et S^{⊖} ayant la signification donnée précédemment,
Y' représente un radical hétérocyclique azoté basique, de préférence un radical basique aromatique contenant au moins un atome d'azote et éventuellement d'autres hétéroatomes en tant que chaînons formant le cycle, ou représente un radical basique cycloaliphatique saturé ou insaturé, contenant au moins un atome d'azote et éventuellement d'autres hétéroatomes en tant que chaînons formant le cycle,
Z', identique à ou différent de X', représente un groupement ayant la signification de X' ou un groupe -COOR₁, dans lequel R₁ a la signification indiquée précédemment,
où les motifs structuraux IV à VI sont présents éventuellement au moins partiellement salifiés par au moins un composé organique (4) de préférence oligomère, comportant au moins un groupe acide et/ou éventuellement au moins partiellement quaternisés avec un composé organique d'alkylation (4').

2. Composition selon la revendication 1, **caractérisée en ce que** le composant polyol (1) est au moins un polyol à courte chaîne, de préférence un polyol aliphatique ayant 2 - 8 atomes de carbone et comportant au moins deux groupes hydroxy, de préférence l'éthylèneglycol, le butanediol, l'hexanediol ou le glycérol, ou un polyoxyalkylène comportant au moins deux groupes hydroxy en bout de chaîne, et le composant polyol (2) est au moins un polyétherpolyol et/ou un polyesterpolyol.

3. Composition selon la revendication 1 ou 2, **caractérisée en ce que** dans les motifs structuraux I à VI
R représente un atome d'hydrogène ou un radical méthyle ou éthyle,
X représente un groupe -NH-R₁ ou un groupe -OR₁, où R₁ représente un atome d'hydrogène, un radical alkyle ayant de 1 à 6 atomes de carbone, un radical alkylène ayant de 1 à 6 atomes de carbone et comportant un groupe OH, de préférence en tant que groupe terminal, ou un radical polyoxyalkylène,
Y représente un radical phényle, naphtyle, pyrrolidine, éventuellement substitué, un radical 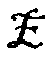 -caprolactame, un radical polyoxyalkylène relié par un pont -O-, ou un radical acétate,
Z représente un groupe -COOR₁, dans lequel R₁ a la signification donnée précédemment, ou
Z conjointement avec le groupe 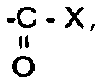 dans lequel X
a la signification d'un groupe -OR₁ et R₁ représente un atome d'hydrogène, forme un groupement anhydride cyclique,
ou dans lequel X a la signification d'un groupe 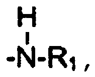 forme un groupement imido cyclique, dont l'atome d'azote est substitué par un radical R₁ ayant la signification donnée précédemment,
X' représente un groupe 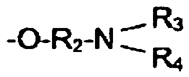 ou un groupe 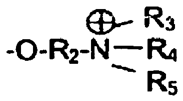 *S^{⊖} quaternisé correspondant représente un groupe 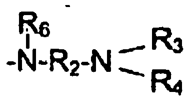 ou un groupe 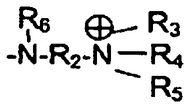 *S^{⊖} quaternisé correspondant,
où R₂ représente un radical alkylène ayant de 1 à 6 atomes de carbone,
R₃, R₄, R₅ ou R₆, identiques ou différents, représentent un radical alkyle ayant de 1 à 3 atomes de carbone ou un radical benzyle, les radicaux R₃ - R₅ pouvant éventuellement être substitués chacun par un groupe -OH,
S^{⊖} représente le radical anionique restant de l'un des composés d'alkylation (4') indiqués ci-après, de préférence un anion halogénure, de façon particulièrement préférée chlorure, bromure ou iodure, un anion sulfate ou un anion carboxylate,
ou X' représente un groupe 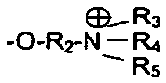 *A^{⊖} salifié correspondant ou un groupe 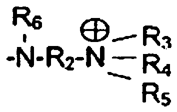 *A^{⊖} salifié correspondant, où
R₂ a la signification donnée précédemment,
R₃, R₄, R₅ et R₆ ont la signification donnée précédemment, mais au moins l'un des radicaux R₃-R₅ représente un atome d'hydrogène, et
A^{⊖} représente le radical anionique restant de l'un des composés (4) utilisés pour la salification, indiqués ci-après,
ou X' dans la signification d'un groupe 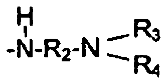 forme conjointement avec Z' en tant qu'un groupe -COOR₁ un groupe imido cyclique, dont l'atome d'azote est substitué par le groupe 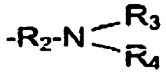 ou par un groupe quaternisé ou salifié correspondant,
Y' représente un radical hétérocyclique basique, aliphatique ou aromatique ayant de 5 à 10 chaînons formant le cycle et comportant au moins un atome d'azote en tant que chaînon formant le cycle, de préférence un radical imidazole, pyrrole, pyrazole, pyrimidine, purine, quinoléine ou pyridine ;
Z', identique à ou différent de X', représente un groupement ayant la signification indiquée précédemment pour X' ou un groupe -COOR₁, dans lequel R₁ a la signification indiquée précédemment,
où les motifs structuraux IV à VI se trouvent éventuellement salifiés de préférence à raison de jusqu'à 75 % par au moins un composé organique (4) de préférence oligomère, comportant au moins un groupe acide et/ou éventuellement quaternisés avec au moins un composé organique d'alkylation (4').

4. Composition selon l'une quelconque des revendications 1 à 3, **caractérisée en ce que** la proportion des motifs structuraux IV-VI à l'état non salifié ou non quaternisé vaut de 5 à 95 % en poids, de préférence de 15 à 60 % en poids et de façon particulièrement préférée de 20 à 45 % en poids, par rapport au poids total du copolymérisat (3).

5. Composition selon l'une quelconque des revendications 1 à 4, **caractérisée en ce que** le copolymérisat présente une masse moléculaire moyenne en nombre de 1 000 à 250 000, de préférence de 2 000 à 25 000, de façon particulièrement préférée de 2 500 à 10 000 g/mole.

6. Composition selon l'une quelconque des revendications 1 à 5, **caractérisée en ce que** le copolymérisat présente une structure statistique, de type gradient ou séquencée des motifs structuraux copolymérisés, qui comprend éventuellement des structures en peigne.

7. Composition selon la revendication 6, **caractérisée en ce que** le copolymérisat est un copolymère diséquencé ou copolymère triséquencé, dans lequel la quantité des motifs structuraux IV-VI dans deux séquences voisines diffère de préférence d'au moins 5 % en poids.

8. Composition selon l'une quelconque des revendications 1 à 7, **caractérisée en ce que** le copolymérisat a été produit par une polymérisation radicalaire contrôlée, de préférence par Atom Transfer Radical Polymerization, Reversible Addition-Fragmentation Chain Transfer Polymerization, par polymérisation radicalaire contrôlée en présence de composés nitroxyle en tant que régulateurs de polymérisation, par polymérisation radicalaire contrôlée avec du tétraphényléthane, par polymérisation radicalaire contrôlée avec du 1,1-diphényléthène, par polymérisation contrôlée avec des iniferters, par polymérisation radicalaire contrôlée en présence de thiocétones ou par polymérisation radicalaire contrôlée en présence de complexes organocobaltiques, ou une polymérisation ionique.

9. Composition selon la revendication 8, **caractérisée en ce que** le copolymérisat a été produit par polymérisation par transfert de groupes.

10. Composition selon l'une quelconque des revendications 1 à 9, **caractérisée en ce que** les motifs structuraux I-III du copolymérisat ont été obtenus par polymérisation de monomères à insaturation éthylénique choisis dans le groupe comprenant des esters d'acide (méth)acrylique qui éventuellement comportent des groupes fonctionnels tels que des groupes OH, halogéno, lactone et/ou époxy ou peuvent dériver de polyéthers, des (méth)acrylamides, le styrène éventuellement substitué, l'acide maléique, son anhydride, ses hémiesters ou diesters, des maléimides, des hétérocycles non basiques comportant au moins un atome d'azote en tant que chaînon formant le cycle, qui comportent des groupes vinyle, et des esters vinyliques d'acides carboxyliques, et les motifs structuraux IV-VI du copolymérisat ont été obtenus par polymérisation de monomères à insaturation éthylénique choisis dans le groupe comprenant des monomères à insaturation éthylénique qui comportent des groupes amino, et des hétérocycles basiques, de préférence aromatiques, comportant au moins un atome d'azote susceptible d'être protoné en tant que chaînon formant le cycle, qui comportent des groupes vinyle, des (méth)acrylates et (méth)acrylamides comportant de préférence au moins un groupe amino, de façon particulièrement préférée des (méth)acrylates d'alkyle en C₁-C₆ comportant au moins un groupe amino et des alkyl (C₁-C₆) (méth)acrylamides comportant au moins un groupe amino, et la 4-vinylpyridine, la 2-vinylpyridine et le vinylimidazole, et des monomères à insaturation éthylénique contenant un oxirane, de préférence le méthacrylate de glycidyle , qui sont mis en réaction avec des amines réactives correspondantes.

11. Composition selon l'une quelconque des revendications 1 à 10, **caractérisée en ce que** le copolymérisat se trouve sous forme liquide.

12. Composition selon l'une quelconque des revendications 1 à 11, **caractérisée en ce que** le copolymérisat est au moins partiellement salifié par au moins un composé organique de préférence au moins oligomère, qui comporte des groupes carboxy, sulfo, phosphono et/ou phosphoryle.

13. Composition selon la revendication 12, **caractérisée en ce que** le composé organique contenant des groupes acides est un polyoxyalkylène, de préférence à base d'un oxyde d'éthylène et/ou de propylène comportant de préférence 3-15 motifs répétitifs, comportant au moins un groupe carboxy, sulfo, phosphono ou phosphoryle, de préférence comportant au moins un groupe carboxy et/ou phosphoryle en bout de chaîne, le polyoxyalkylène pouvant être lié en outre à au moins un acide gras par un groupement ester ou en outre à au moins un alcool en C₁-C₂₄ par un groupement éther.

14. Composition selon l'une quelconque des revendications 1 à 13, **caractérisée en ce que** pour la quaternisation on a fait réagir le copolymérisat avec au moins un composé organique choisi dans le groupe comprenant des halogénures d'alkyle, sulfates de dialkyle et/ou composés époxy, éventuellement substitués, en association avec des acides.

15. Composition selon l'une quelconque des revendications 1 à 14, **caractérisée en ce que** l'additif inducteur consiste en une association d'un copolymérisat au moins partiellement salifié et d'un copolymérisat au moins partiellement quaternisé.

16. Composition selon l'une quelconque des revendications 1 à 15, **caractérisée en ce qu'**au moins 5 % en poids du copolymérisat consistent en des motifs structuraux comportant des groupes amino salifiés et/ou quaternisés.

17. Composition selon l'une quelconque des revendications 1 à 16, **caractérisée en ce que** la composition contient encore des adjuvants et additifs qui de préférence consistent au moins en un composé choisi dans le groupe comprenant des catalyseurs, des accélérateurs, des agents de réticulation de chaînes, des agents de moussage, des stabilisants de mousse, des antimousses, des agents de désaération, des réducteurs de viscosité, des agents de thixotropie, des stabilisants thermiques, des agents ignifuges éventuellement conjointement avec des antioxydants, des colorants, des pigments, des charges organiques ou inorganiques, des dispersants et agents mouillants, des additifs de processus, des promoteurs d'adhérence, des agents de démoulage, des plastifiants, des agents antistatiques, des stabilisants vis-à-vis de l'oxydation, des solvants.

18. Composition selon l'une quelconque des revendications 1 à 17, **caractérisée en ce que** par rapport à 100 % en poids du composant polyol (1), du composant polyol (2) et du copolymérisat (3), la proportion du composant (1) vaut de 1 à 99 % en poids, la proportion du composant (2) vaut de 1 à 99 % en poids et la proportion du copolymérisat (3) vaut de 0,1 à 10 % en poids, de préférence de 0,25 à 5 % en poids, la quantité des composants (1)-(3) devant toujours donner au total 100 % en poids.

19. Utilisation d'une composition selon l'une quelconque des revendications 1 à 18, pour la production de polyuréthanes, de préférence pour la production d'une matière polyuréthane transformée en mousse ou non transformée en mousse.

20. Utilisation selon la revendication 19, **caractérisée en ce qu'**on fait réagir la composition avec au moins un composant polyisocyanate organique.

21. Procédé pour la préparation d'une matière polyuréthane transformée en mousse ou non transformée en mousse, **caractérisé en ce qu'**on fait réagir une composition selon l'une quelconque des revendications 1 à 18 avec au moins un composé polyisocyanate organique en présence d'un catalyseur.

22. Article en polyuréthane transformé en mousse ou non transformé en mousse, pouvant être obtenu par mise en réaction d'une composition selon l'une quelconque des revendications 1 à 18 avec au moins un composant polyisocyanate organique.
